# EUROPEAN PATENT APPLICATION

(11) **EP 4 163 640 A1**
(43) Date of publication of application: **12.04.2023**
(21) Application number: 21820090.5
(22) Date of filing: 05.02.2021
(51) Int. Cl.: G01N 35/04

(54) **AUTOMATIC ANALYSIS DEVICE**

(30) Priority: 08.06.2020 JP 2020099591
(71) Applicant: HITACHI HIGH-TECH CORPORATION, Tokyo 105-6409 (JP)
(72) Inventor: HORIUCHI Rie, Tokyo 105-6409 (JP); YASUI Akihiro, Tokyo 105-6409 (JP)
(74) Representative: MERH-IP Matias Erny Reichl Hoffmann Patentanwälte PartG mbB
(86) International application number: PCT/JP2021/004440
(87) International publication number: WO 2021/250940

(57) **Abstract**

An automatic analysis apparatus includes: a driving rotor configured such that a rotational center extends vertically; a reaction disk mounted on the driving rotor; a plurality of reaction cells installed in the reaction disk and configured to form a circular row concentric with the driving rotor; a circular reaction chamber configured to accommodate the reaction cells; and a guide configured to guide an elevation trajectory of the reaction disk with respect to the driving rotor.

## Description

### Technical Field

The present invention relates to an automatic analysis apparatus that analyzes a specimen using a reaction cell.

### Background Art

An automatic analysis apparatus such as a biochemical analysis apparatus or an immunoassay apparatus is known as an apparatus analyzing blood, urine, or the like collected from patients. In such an automatic analysis apparatus, a reaction cell is used to mix a specimen and a reagent for reaction. A reaction cell is a consumable article which is necessary to exchange every predetermined period.

As one automatic analysis apparatus in which it is necessary to exchange a reaction cell every predetermined period, there is a biological automatic analysis apparatus using a mechanism with a turn table shape called a reaction disk. A plurality of reaction cells are mounted on the outer circumference of the reaction disk and the reaction cells are disposed in a circular form. The reaction cells installed in the reaction disk are located inside a doughnut type pool called a reaction chamber and are dipped in a liquid which is kept warm at a constant temperature inside the reaction chamber. Spectrometric light source lamps are disposed close to a circular row of the reaction cells. Since the reaction cells are disposable, it is necessary to exchange the reaction cells every given period. However, it is necessary for a user to execute maintenance of the reaction chamber or the light source lamps. It is necessary to clean the reaction chamber every given period and it is necessary to exchange the light source lamps every given period.

When the reaction chamber is cleaned, for example, it is necessary for the user to discharge the liquid inside the reaction chamber and detach the reaction cells from the reaction disk to reach the reaction chamber. When the light source lamps are installed on the lower side of the reaction disk, it is necessary for the user to detach the reaction disk from the automatic analysis apparatus at the time of exchange of the light source lamps. Even in this case, when the reaction disk is detached, all the reaction cells have to be detached in advance from the reaction disk. Since all the reaction cells have to be detached at every cleaning of the reaction chamber or every exchange of the light source lamps, time and effort for maintenance is necessary. In particular, in an automatic analysis apparatus in which a radius of a reaction disk is large, a workload forced for executing the maintenance increases since the number of reaction cells increases by that.

JPH11-316235A (PTL 1) discloses a reaction disk assumed to be detached from an automatic analysis apparatus with reaction cells mounted thereon.

### Citation List

### Patent Literature

PTL 1: JPH11-316235A

### Summary of Invention

### Technical Problem

The reaction disk is mounted from the upper side of a rotor rotating around a vertical axis. Therefore, when the reaction disk is detached from the rotor, it is necessary to lift up the reaction disk vertically. However, it is difficult to lift up the reaction disk exactly vertically and much shaking is involved in the operation of lifting the reaction disk. It is difficult to detach the reaction disk without completely interfering with the rotor, and the reaction disk interferes with the rotor bit by bit during the lifting. The same applies when the reaction disk is mounted on the rotor. This phenomenon considerably arises as the radius of the reaction disk is larger and fit tolerance between the reaction disk and the rotor is smaller.

In the area of the reaction chamber, not only the reaction disk, the reaction cells, and the light source lamps but also a churning mechanism or a cleaning mechanism, and wirings of the electrical devices gather together. Therefore, when the reaction disk is taken out from the rotor with the reaction cells being mounted on and the reaction disk is lifted up while moving the disk bit by bit in the horizontal direction, the reaction cells may interfere with peripheral components such as the churning mechanism or the wirings. The same applies when the reaction disk is mounted. The peripheral components are generally made of a resin as in the reaction cells or are made of a metal with higher hardness. When the reaction cells and the peripheral components interfere with each other, the reaction cells or the peripheral components may be damaged in some cases. In these cases, analysis accuracy of a sample is likely to deteriorate. In the extreme case, analysis is likely not to be possible.

Further, when the reaction cells dipping in the liquid of the reaction chamber are taken out from the rotor along with the reaction disk, the liquid adhering to an external wall of the reaction cell falls on a peripheral component in some cases. For example, when the liquid is applied to an electrical component such as a light source lamp or the wiring, a light-emitting surface of the light source lamp becomes dirty or clouded or the wiring is short-circuited in some cases. Still, the analysis accuracy of the sample is likely to deteriorate and the analysis is likely not to be possible.

An object of the invention is to provide an automatic analysis apparatus capable of detaching and mounting a reaction disk with reaction cells being mounted and efficiently executing maintenance, and thus protecting the reaction cells or peripheral components when the reaction disk is detached and mounted.

### Solution to Problem

To achieve the forgoing object, the invention provides an automatic analysis apparatus including a driving rotor configured such that a rotational center extends vertically; a reaction disk mounted on the driving rotor; a plurality of reaction cells installed in the reaction disk and configured to form a circular row concentric with the driving rotor; a circular reaction chamber configured to accommodate the reaction cells; and a guide configured to guide an elevation trajectory of the reaction disk with respect to the driving rotor.

### Advantageous Effects of Invention

According to the invention, it is possible to detach and mount a reaction disk with reaction cells being mounted and efficiently execute maintenance, and thus it is possible to protect the reaction cells or the peripheral components when the reaction disk is detached and mounted.

### Brief Description of Drawings

[Fig. 1] Fig. 1 is a schematic view illustrating an overall configuration of an automatic analysis system including an automatic analysis apparatus according to a first embodiment of the present invention.
[Fig. 2] Fig. 2 is a schematic perspective view illustrating the outer appearance of the automatic analysis apparatus according to the first embodiment of the present invention.
[Fig. 3] Fig. 3 is a sectional view illustrating a reaction disk and peripheral components included in the automatic analysis apparatus according to the first embodiment of the present invention and taken along a plane including a rotational center line of the reaction disk.
[Fig. 4] Fig. 4 is an enlarged view illustrating main units of Fig. 3.
[Fig. 5] Fig. 5 is a perspective view when a segment of a reaction cell included in the automatic analysis apparatus according to the first embodiment of the present invention is viewed from an upper side.
[Fig. 6] Fig. 6 is a perspective view when the segment of the reaction cell included in the automatic analysis apparatus is viewed from a lower side according to the first embodiment of the present invention.
[Fig. 7] Fig. 7 is a diagram illustrating a state in which the reaction disk included in the automatic analysis apparatus according to the first embodiment of the present invention is lifted.
[Fig. 8] Fig. 8 is a flowchart illustrating an example of a procedure for exchange work of the reaction cell in the automatic analysis apparatus according to the first embodiment of the present invention.
[Fig. 9] Fig. 9 is a flowchart illustrating another example of the procedure for exchange work of the reaction cell in the automatic analysis apparatus according to the first embodiment of the present invention.
[Fig. 10] Fig. 10 is a flowchart illustrating an example of a procedure for cleaning work of the reaction chamber in the automatic analysis apparatus according to the first embodiment of the present invention.
[Fig. 11] Fig. 11 is a flowchart illustrating the example of the procedure for cleaning work of the reaction chamber in the automatic analysis apparatus according to the first embodiment of the present invention.
[Fig. 12] Fig. 12 is a sectional view illustrating a reaction disk and peripheral components included in an automatic analysis apparatus according to a second embodiment of the present invention and taken along a plane including a rotational center line of the reaction disk.
[Fig. 13] Fig. 13 is sectional view illustrating a reaction disk and peripheral components included in an automatic analysis apparatus according to the second embodiment of the present invention and taken along a plane including a rotational center line of the reaction disk.
[Fig. 14] Fig. 14 is sectional view illustrating a reaction disk and peripheral components included in an automatic analysis apparatus according to a third embodiment of the present invention and taken along a plane including a rotational center line of the reaction disk.
[Fig. 15] Fig. 15 is a diagram illustrating a state in which the reaction disk included in the automatic analysis apparatus according to the third embodiment of the present invention is lifted.
[Fig. 16] Fig. 16 is a sectional view illustrating a reaction disk and peripheral components included in the automatic analysis apparatus according to a fourth embodiment of the present invention and taken along a plane including a rotational center line of the reaction disk.
[Fig. 17] Fig. 17 is a diagram illustrating a state in which the reaction disk included in the automatic analysis apparatus according to the fourth embodiment of the present invention is lifted.
[Fig. 18] Fig. 18 is a partial arrow view taken along an arrow XVIII of Fig. 17.
[Fig. 19] Fig. 19 is a flowchart illustrating an example of a procedure for exchange work of the reaction cell in the automatic analysis apparatus according to the fourth embodiment of the present invention.
[Fig. 20] Fig. 20 is a schematic view illustrating a reaction chamber and peripheral components included in an automatic analysis apparatus according to a fifth embodiment of the present invention.

### Description of Embodiments

Hereinafter, embodiments of the invention will be described with reference to the drawings.

### (First Embodiment)

### - Automatic Analysis System -

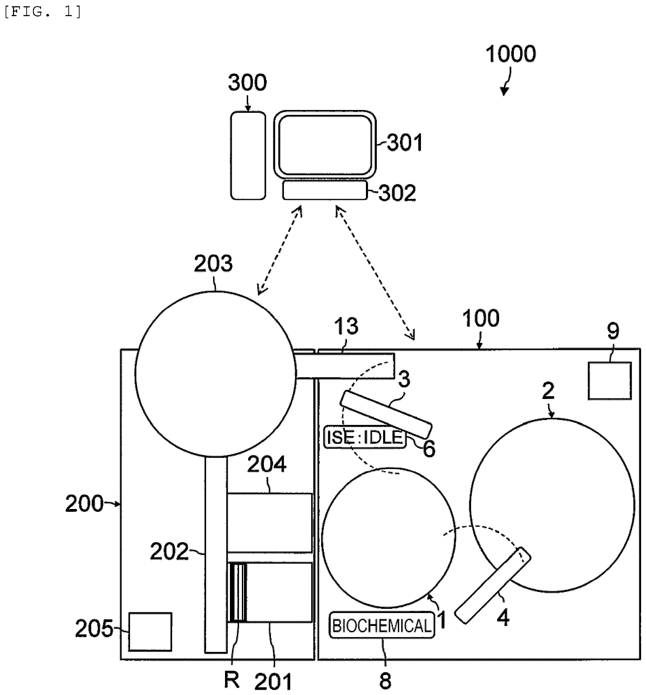

Fig. 1 is a schematic view illustrating an overall configuration of an automatic analysis system including an automatic analysis apparatus according to a first embodiment of the present invention. An automatic analysis system 1000 illustrated in the drawing is a biological item measuring system that executes qualitative or quantitative analysis of an organism sample such as blood or urine and includes an automatic analysis apparatus 100, a transport unit 200, and a control apparatus 300.

The transport unit 200 is an apparatus that inputs a specimen rack R and retrieve the specimen rack R to and from the automatic analysis system 1000 and also have a role of transporting the specimen rack R to the automatic analysis apparatus 100. At least one sample container that contains a sample is mounted on the specimen rack R. The transport unit 200 is not limited to a type (rack type) unit that mounts a sample container on the specimen rack R and inputs the specimen rack R to a transport line 202 (to be described below) or the like. A type (disk type) unit that sets a sample container to a disk and inputs the specimen container through rotation of the disk can also be applied.

The transport unit 200 includes a rack supply unit 201, the transport line 202, a rack buffer 203, a rack accommodation unit 204, and a controller 205 for transport control. In the transport unit 200, the specimen rack R installed in the rack supply unit 201 is transported to the rack buffer 203 along the transport line 202. In a midway portion of the transport line 202, there is a sensor (not illustrated) for sample presence or absence determination, and thus a sample container mounted on the specimen rack R is recognized by this sensor. When the sample container is recognized by the sensor, a barcode attached to the sample container is read by a barcode reader (not illustrated) and identification information of a sample is recognized. A patient is also identified with the identification information. A scheme of recognizing the identification information of the sample is various and is not limited to the scheme of using a barcode. For example, a specimen rack and a position at which a sample is set are registered for each sample container, and a specimen rack on which the designated sample container is mounted is transported by the transport unit 200 in an operation in some cases. In these cases, the barcode attached to the sample container and the barcode reader may be omitted.

The rack buffer 203 is a device that has a turn table shape rotating around a vertical axis and the plurality of specimen racks R are retained in the outer circumference of the rack buffer 203. The specimen racks R retained in the rack buffer 203 extend in a radius direction of the rack buffer 203 and are arranged in a circular and radial shape. The transport line 202 and a sample dispensing line 13 (to be described below) are connected in the radius direction to the rack buffer 203 at different positions in the circumferential direction. The target specimen rack R is delivered between the transport line 202 and the sample dispensing line 13 (to be described below) by rotating the rack buffer 203 by a motor (not illustrated). Irrespective of an order of reception in the rack buffer 203 from the transport line 202, the target specimen rack R (for example, a specimen rack with high priority) can be sent from the rack buffer 203 to the sample dispensing line 13. The specimen rack R in which a sample has been sucked in the sample dispensing line 13 is transported to the rack accommodation unit 204 via the rack buffer 203 and the transport line 202. The specimen rack R in which the sample has been sucked in the sample dispensing line 13 is returned to the rack buffer 203 and is awaited until a measurement result is output in the automatic analysis apparatus 100. When re-examination becomes necessary, the specimen rack R is sent again to the sample dispensing line 13. The controller 205 is also a computer that is responsible for controlling the transport unit 200 and executes an operation of transporting the specimen rack R from the rack buffer 203 to the sample dispensing line 13, an operation of transporting the specimen rack R from the sample dispensing line 13 to the rack buffer 203, and the like.

The control apparatus 300 is a computer that generally controls the automatic analysis apparatus 100 and the transport unit 200 and is connected to the automatic analysis apparatus 100 (a controller 9 to be described below) or the transport unit 200 (the controller 205) via a wired or wireless network line. The control apparatus 300 includes a monitor 301 and a user interface 302. The monitor 301 displays a screen for ordering a measurement item for each sample, a screen for confirming a measurement result, and the like. The user interface 302 is an input device with which a user inputs various instructions, and various input devices such as a keyboard, a mouse, and a touch panel can be appropriately adopted as the user interface 302.

### - Automatic Analysis Apparatus -

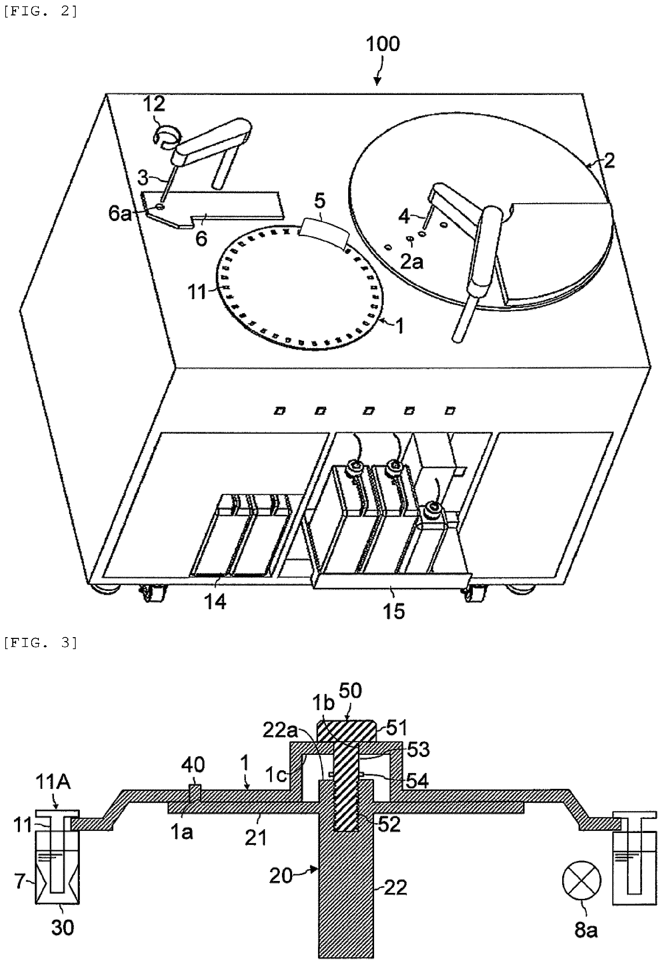

Fig. 2 is a schematic perspective view illustrating the outer appearance of the automatic analysis apparatus 100. In the drawing, an example in which a biochemical analysis apparatus including a biochemical analysis unit that measures biochemical items is adopted as the automatic analysis apparatus 100 will be given. However, for example, an immunoassay apparatus can also be adopted as the automatic analysis apparatus 100. The automatic analysis apparatus 100 is a unit that measures an item ordered for each sample and outputs a measurement result and is structurally connected to the transport unit 200. The automatic analysis apparatus 100 includes a reaction disk 1, a reagent disk 2, a sample probe 3, a reagent probe 4, a cleaning mechanism 5, an ISE analyzer 6, a churning mechanism 7 (see Fig. 3), a biochemical measurer 8 (see Fig. 1), and the controller 9 (see Fig. 1).

The reaction disk 1 is a component that has a turn table shape rotating around a vertical axis. The plurality of reaction cells 11 are installed in the outer circumference of the reaction disk 1. The plurality of reaction cells 11 form a circular row. The reaction cell is a disposable container that has an opened upper portion and is made of a chemicalresistant resin and extends vertically in a state in which the reaction cell is mounted on the reaction disk 1. A sample suction position 12 is set near the reaction disk 1. The sample dispensing line 13 (see Fig. 1) transporting the specimen rack R (see Fig. 1) is installed to overlap the sample suction position 12. A sample container (not illustrated) mounted on the specimen rack R contains an organism sample of a patient such as blood or urine, a standard solution for calibration curve generation, or a sample for accuracy management. The sample dispensing line 13 transports the specimen rack R accepted from the rack buffer 203 to the sample suction position 12 and returns the specimen rack R after the dispensing to the rack buffer 203.

The reagent disk 2 is a device that has a turn table shape rotating around the vertical axis. A plurality of reagent bottles (not illustrated) accommodating a reagent can be installed in a circular shape. The reagent disk 2 serves as a role of a reagent storage and has a function of keeping a stored reagent cool. The reagent disk 2 is covered with a cover in which a suction port 2a is formed.

The sample probe 3 is an element that dispenses a sample from the sample container to the reaction cell 11 and is configured to be located between the reaction disk 1 and the sample suction position 12, extend vertically, and execute rotational movement in the horizontal direction and translation movement in the vertical direction. A syringe (not illustrated) for suction of a sample or the like is connected to the sample probe 3. The sample probe 3 is entered into a sample container transported to the sample suction position 12 and sucks a sample or the like with the syringe, and then draws an arc form about a rotation axis to be moved in a circular row of the reaction cells 11 of the reaction disk 1. The target reaction cell 11 is transported to a dispensing position of the sample probe 3 by the reaction disk 1 and the sample probe 3 descends and is entered into the target reaction cell 11, and ejects (dispenses) the sample or the like with the syringe. Although not illustrated in particular, a dedicated cleaning chamber is installed on a movement path of the sample probe 3 and the sample probe 3 can be cleaned in the cleaning chamber.

The reagent probe 4 is an element that dispenses a reagent from the reagent bottle to the reaction cell 11, is located between the reaction disk 1 and the reagent disk 2, and is configured to be able to rotate and move vertically as in the sample probe 3. A syringe (not illustrated) for reagent suction is connected to the reagent probe 4. A target reagent bottle is transported to the reagent disk 2 immediately below the suction port 2a of the reagent disk 2 and the reagent probe 4 is entered into the target reagent bottle via the suction port 2a to suck a reagent with the syringe. Thereafter, the reagent probe 4 is moved in a circular row of the reaction cells 11 of the reaction disk 1. The target reaction cell 11 is transported to a dispensing position of the reagent probe 4 by the reaction disk 1 and the reagent probe 4 descends and is entered into the target reaction cell 11 to eject (dispense) the reagent with the syringe. Although not particularly illustrated, dedicated cleaning chamber is installed on a movement path of the reagent probe 4 and the reagent probe 4 can be cleaned in the cleaning chamber.

The cleaning mechanism 5 is a mechanism that cleans the reaction cell 11 and is disposed close to the reaction cell 11 installed in the reaction disk 1. A cleaning pump (not illustrated) is connected to the cleaning mechanism 5 and a detergent such as an alkaline detergent or an acidic detergent is dispensed from a detergent container 14 to the reaction cell 11.

The ISE analyzer 6 is a device that measures electrolytic concentration in the sample using an ion selection electrode, is located on a movement path of the sample probe 3, and is covered with a cover in which a dispensing port 6a is provided. When an ISE item is measured, the sample probe 3 is inserted into an ISE dilution chamber (not illustrated) via the dispensing port 6a so that the sample sucked from the sample container is disposed to an ISE dilution layer. An ISE reagent is sent from the ISE reagent container 15 to the ISE dilution chamber, and thus the ISE item is analyzed.

The churning mechanism 7 (see Fig. 3) is a device that churns a liquid (a sample, a reagent, or the like) accommodated in the reaction cell 11, is installed inside a reaction chamber 30 (see Fig. 3), and is disposed close to the reaction cell 11 installed in the reaction disk 1. In the embodiment, the churning mechanism 7 is a contactless type mechanism and churns a liquid inside the reaction cell 11 without coming into contact with the reaction cell 11 and the liquid inside the reaction cell. An ultrasonic churning mechanism can be exemplified as an example of the churning mechanism 7, and the liquid is churned by irradiating the liquid inside the reaction cell 11 with ultrasonic waves from the outside of the reaction cell 11.

The biochemical measurer 8 is an analyzer that analyzes biochemical components of the sample and is disposed close to the reaction cell 11 installed in the reaction disk 1. The biochemical measurer 8 is formed by a light source lamp 8a (see Fig. 3) and a spectrophotometer and measures absorbance of a reaction liquid in which the sample and the reagent are churned and mixed inside the reaction cell 11 to analyze the biochemical components of the sample.

The controller 9 (see Fig. 1) is a computer that is connected to each of the foregoing devices, and controls an operation of the automatic analysis apparatus 100 or transmits an analysis result to the control device 300, and includes a CPU and a memory. The controller 9 is connected to the control device 300 via a network line, and transmits and receives signals and data to and from the control device 300.

### - Operation -

An overview of an operation of the automatic analysis system 1000 will be described. In the transport unit 200, the specimen rack R installed in the rack supply unit 201 is sent onto the transport line 202 for each rack and is imported to the rack buffer 203. The rack buffer 203 is controlled in response to an instruction from the control device 300 by the controller 205 and the specimen rack R on which a target sample container is loaded is exported from the rack buffer 203 to the sample dispensing line 13. When the specimen rack R is transported with the sample dispensing line 13 and the target sample container arrives at the sample suction position 12, the sample is dispensed to the reaction cell 11 from the target sample container by the sample probe 3. Thereafter, for the reaction cell 11 to which the sample is dispensed, the reagent sucked from the reagent bottle of the reagent disk 2 is dispensed by the reagent probe 4. The sample and the reagent inside the reaction cell 11 are churned by the churning mechanism 7 and thus a reaction liquid is generated. Thereafter, absorbance of the reaction liquid is measured by the biochemical measurer 8 and a measurement result is transmitted from the controller 9 to the control device 300. The reaction cell 11 used for the analysis is cleaned with a detergent dispensed from the cleaning mechanism 5 and waits until a subsequent use opportunity. The control device 300 obtains concentration of a specific component included in the sample by executing a calculation process on the received measurement result, and displays and outputs a result on the monitor 301 or record the result on the memory.

### - Peripheral Structure of Reaction Disk -

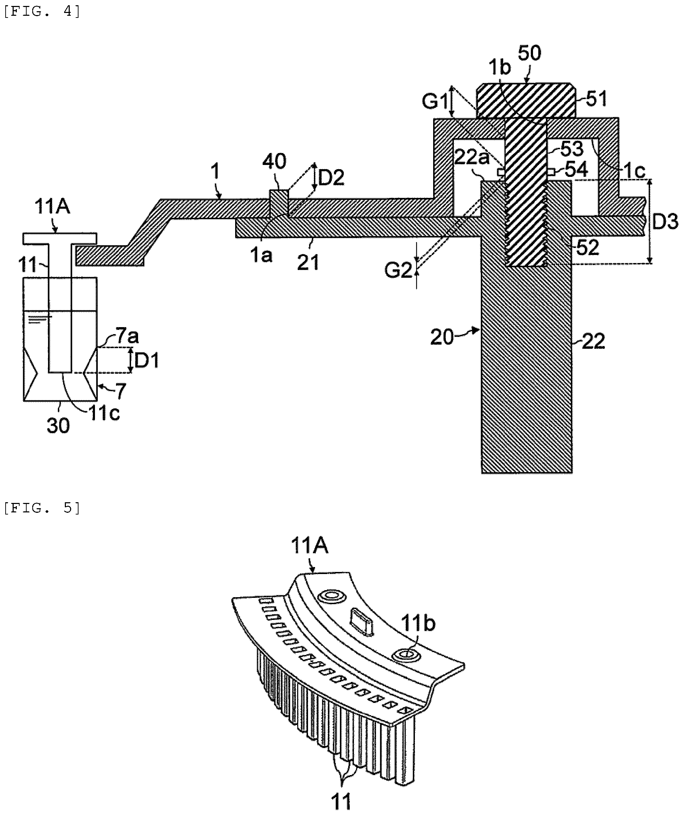

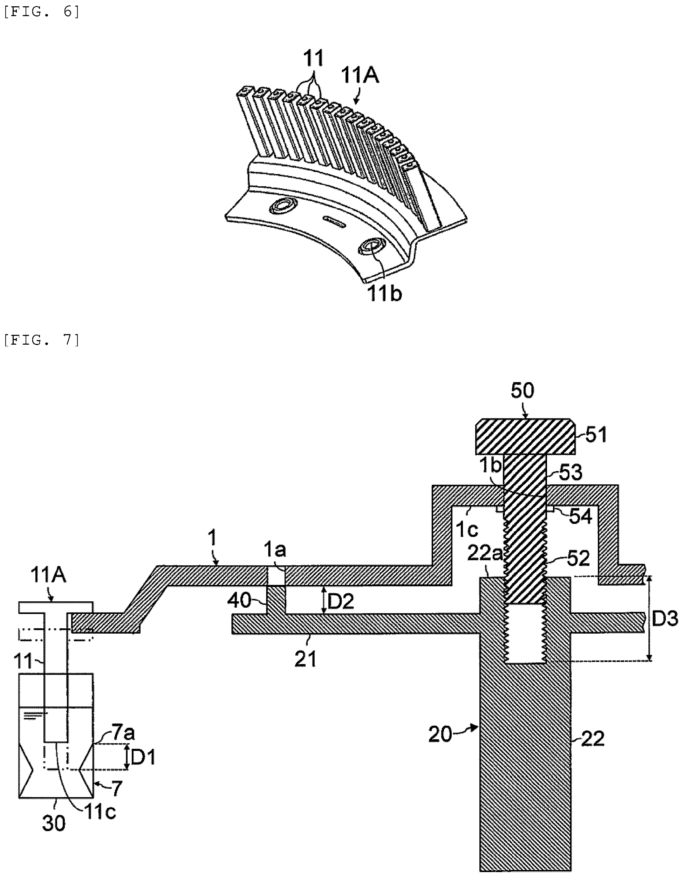

Fig. 3 is a sectional view illustrating a reaction disk and peripheral components and taken along a plane including a rotational center line of the reaction disk. Fig. 4 is an enlarged view illustrating main units of Fig. 3. Fig. 5 is a perspective view when a segment of the reaction cell is viewed from an upper side. Fig. 6 is a perspective view when the segment is viewed from a lower side. Fig. 7 is a diagram illustrating a state in which the reaction disk is lifted and corresponds to Fig. 4.

The automatic analysis apparatus 100 includes a driving rotor 20, a reaction chamber 30, a guide 40, and a screw 50 in addition to the reaction cell 11, the churning mechanism 7, and the light source lamp 8a described above as constituent elements disposed around the reaction disk 1.

### • Driving rotor 20 / Reaction Disk 1 / Reaction Cell 11

The driving rotor 20 is a rotor in which a rotational center line extends vertically and includes a driving disk 21 and a shaft 22. The driving disk 21 is formed in a disk shape and the shaft 22 is formed in a columnar shape. The driving disk 21 and the shaft 22 are integrally formed, and the shaft 22 extending vertically is located and protrudes vertically from the driving disk 21, centering on the driving disk 21 that has a disk shape spreading along a horizontal surface.

The reaction disk 1 is concentric with the driving rotor 20, is mounted to be superimposed in the upper portion of the driving disk 21 and comes into contact with the driving disk 21 so that mutually facing surfaces are broad. On the other hand, in the middle of the reaction disk 1, there is a stepped portion with a cylindrical shape protruding upward. As illustrated in Fig. 4, even in a state in which the facing surfaces of the reaction disk 1 and the driving disk 21 come into contact with each other, a given gap is formed between the reaction disk 1 and the shaft 22. The facing surfaces of the reaction disk 1 and the driving disk 21 are flat surfaces in the embodiment.

The plurality of reaction cells 11 are installed on the outer circumference of the reaction disk 1 and form a circular row concentric with the driving rotor 20. A rotational force is transmitted to the shaft 22 by a motor (not illustrated). Accordingly, the driving rotor 20 rotates and the reaction cells 11 moves drawing a circle. The motor driving the driving rotor 20 is driven in response with an instruction signal given from the controller 9 in accordance with a dispensing order of a sample or a reagent, a reaction time necessary for measurement, and the like output from the control device 300.

The reaction cells 11 can be individually mounted one by one in the reaction disk 1. In the embodiment, however, the plurality of reaction cells 11 are segmented, as illustrated in Figs. 5 and 6. The circular row of the reaction cells 11 is formed by arranging and mounting a plurality of segments 11A that each have the plurality of reaction cells 11 lined in an arc shape in the outer circumference of the reaction disk 1 in a circumferential direction. In the embodiment, a through hole 11b (see Fig. 5) is formed in the segment 11A. The segment 11A is fixed to the reaction disk 1 by screwing a screw (not illustrated) through the through hole 11b to the reaction disk 1. However, a fixing structure of the segment 11A to the reaction disk 1 is not limited and can be appropriately substituted with another fixing structure such as a stopper or a clamp.

### • Reaction Chamber 30 / Churning Mechanism 7 / Light Source Lamp 8a

The reaction chamber 30 is a doughnut type pool that accommodates the reaction cells 11. In an analysis operation, the reaction cell 11 is dipped in a liquid reserved and circulated in the reaction chamber 30. A representative liquid stored in the reaction chamber 30 is water, but another liquid such as an oil is used in some cases.

The above-described churning mechanism 7 is one of in-chamber components installed inside the reaction chamber 30 and is closer to the reaction cell 11 than a wall surface (an inner wall on the inner circumferential side and the outer circumferential side) of the reaction chamber 30, as illustrated in Fig. 4. In this example, the churning mechanism 7 will be described as an example of an in-chamber component. However, instead of the churning mechanism 7 or in addition to the churning mechanism 7, a fixing bed (not illustrated) of the cleaning mechanism 5 is disposed inside the reaction chamber 30 so that an in-chamber component is configured in some cases.

The light source lamp 8a is a constituent element of the above-described biochemical measurer 8 and is disposed close to the reaction chamber 30 on the lower side of the reaction disk 1 on the inner circumferential side of the doughnut type reaction chamber 30. When the sample is analyzed, the reaction cell 11 is irradiated via a transmission window (not illustrated) provided in the reaction chamber 30 with examination light from the light source lamp 8a. In Fig. 3, the light source lamp 8a is disposed at a position at which there is no vertical superimposition with the driving disk 21, and thus a hand of the user can easily reach the light source lamp 8a by detaching the reaction disk 1 from the driving rotor 20.

### • Guide 40

The guide 40 is an element that guides an elevation trajectory along which the reaction disk 1 is translated vertically with respect to the driving rotor 20 and a columnar pin is adopted in the embodiment. The guide 40 may be a member separate from the driving disk 21 or may be molded to be integrated with the driving disk 21. The guide 40 protrudes vertically upward from the upper surface of the driving disk 21 and penetrates through a pin hole 1a formed in the reaction disk 1. A configuration in which the pin hole 1a is formed in the driving disk 21 and the guide 40 is provided in the reaction disk 1 can be considered. However, the configuration illustrated in Fig. 3 is preferable from an aspect in which the guide 40 is pulled into the pin hole 1a. One pair of guide 40 and pin hole 1a may be used, but a plurality of pairs of guide 40 and pin hole 1a may be used. When the plurality of pairs of guide 40 and pin hole 1a are provided, the size and the shape of the guide 40 are uniform and the pairs of guide 40 and pin hole 1a are preferably disposed, for example, at an equal interval in a circumferential direction on a virtual circle concentric with the driving rotor 20 so that a center of gravity of an assembly of the reaction disk 1 and the driving rotor 20 does not deviate from a central line of the shaft 22.

The reaction disk 1 is positioned with respect to the driving disk 21 by the pin hole 1a and the guide 40 and a positional relationship between the reaction disk 1 and the driving disk 21 is determined in a radial direction and a circumferential direction. For fitting tolerance between the pin hole 1a and the guide 40, a diameter difference between the pin hole 1a and the guide 40 is preferably small in a clearance fit range. The positions of the guide 40 and the pin hole 1a may be inside the driving disk 21 in the radius direction, but are preferably outside from the viewpoint of inhibiting an influence of the diameter difference between the pin hole 1a and the guide 40 on accuracy of the position in the circumferential direction of the reaction cell 11.

### • Screw 50

The screw 50 is configured as a fixing mechanism that fixes the reaction disk 1 to the driving rotor 20 and also serves as a lift mechanism (to be described below) of the reaction disk 1 or a retention mechanism (to be described below) of the reaction disk 1. In the embodiment, only one screw 50 is used. The screw 50 is disposed at a rotation center of the driving rotor 20, is entered from the upper side into a through hole 1b penetrating vertically in the center of the reaction disk 1, penetrates through the reaction disk 1 to be screwed into a screw hole formed at the center of the shaft 22 of the driving rotor 20 and extending vertically.

Specifically, the screw 50 includes a head portion 51, a shaft portion 52, a body portion 53, and a protrusion portion 54. The shaft portion 52 is a threaded portion and is screwed into the screw hole of the shaft 22 of the driving rotor 20. The diameter of the head portion 51 is larger than the diameter of the through hole 1b of the reaction disk 1 and the lower surface (a seat surface) of the head portion 51 presses the upper surface of the reaction disk 1 in a state in which the screw 50 is tightened to the driving rotor 20 as in Fig. 3. The body portion 53 is a portion connecting the head portion 51 to the shaft portion 52 and has a columnar shape with no thread. A gap is ensured between the outer circumferential surface of the body portion 53 and the inner circumferential surface of the through hole 1b so that the screw 50 and the reaction disk 1 are not rotated together.

The protrusion portion 54 is a ring-shaped portion provided on the body portion 53 and protrudes from the outer circumferential surface of the body portion 53. The diameter of the protrusion portion 54 is larger than the diameter of the through hole 1b of the reaction disk 1. In the embodiment, a snap ring (for example, an E snap ring) is adopted as the protrusion portion 54. After the screw 50 passes through the through hole 1b of the reaction disk 1, the snap ring is fixed and mounted to the body portion 53 protruding below the reaction disk 1, which is the protrusion portion 54. In this way, the screw 50 is related to the reaction disk 1 in the protrusion portion 54 and the head portion 51. When the protrusion portion 54 is not detached, a structure in which the screw 50 is not dislocated from the reaction disk 1 is achieved.

### - Function of Screw 50 -

The protrusion portion 54 of the screw 50 is mounted on the body portion 53 to be located at a position away from both the facing surfaces of the reaction disk 1 and the shaft 22 between the reaction disk 1 and the shaft 22 in a state in which the reaction disk 1 comes into contact with the driving disk 21 and the head portion 51 comes into contact with the reaction disk 1 as in Fig. 4. Specifically, under the state of Fig. 4, a gap of a distance G1 is formed between the protrusion portion 54 and a lower surface 1c of the reaction disk 1 and a gap of a distance G2 is formed between the protrusion portion 54 and an upper surface 22a of the shaft 22. By ensuring the distances G1 and G2, when the screw 50 is tightened, the reaction disk 1 is firmly pressed by the head portion 51 to be stably fixed to the driving rotor 20. In this way, the screw 50 functions as a fixing mechanism of the reaction disk 1. Here, it is not necessary to ensure the distances G1 and G2 more than necessary.

The screw 50 also functions as a lift mechanism that translates the reaction disk 1 vertically with respect to the driving rotor 20. In the present specification, a mechanism that converts motive power into mechanical work and gives force to the reaction disk 1 in at least one of an upward vertical direction and a downward vertical direction is called "lift mechanism". The embodiment is an example in which the screw 50 is adopted as a lift mechanism and human power serving as motive power is converted into a shaft force of the screw serving as mechanical work. When the screw 50 is loosened from the state of Fig. 4, the screw 50 ascends with respect to the driving rotor 20 and the protrusion portion 54 comes into contact with the lower surface 1c of the reaction disk 1. When the screw 50 is further loosened in a state in which the protrusion portion 54 comes into contact with the lower surface 1c of the reaction disk 1, the ascending protrusion portion 54 lifts up the reaction disk 1 to ascend with respect to the driving disk 21, as illustrated in Fig. 7. Conversely, when the screw 50 is tightened from the state of Fig. 7, the screw 50 descends with respect to the driving rotor 20 and the reaction disk 1 descends by the own weight with respect to the driving rotor 20 to come into contact with the driving disk 21 with being loaded on the protrusion portion 54. When the screw 50 is further tightened in a state in which the reaction disk 1 comes into contact with the driving disk 21, the protrusion portion 54 becomes away from the lower surface 1c of the reaction disk 1, the head portion 51 of the screw 50 presses the reaction disk 1, and the reaction disk 1 is rigidly fixed to the driving rotor 20. At this time, the elevation trajectory of the reaction disk 1 with respect to the driving rotor 20 is vertically guided by the guide 40 and a deflection of the trajectory of the reaction disk 1 in the radial direction is inhibited within a range of the fitting tolerance between the guide 40 and the pin hole 1a.

Of course, power other than human power can be used as motive power converted into mechanical work by a lift mechanism. For example, an example in which a restoration force of a spring is used in a third embodiment and an example in which electric power is used in a fourth embodiment will be described below.

Further, when the screw 50 is loosened and the reaction disk 1 ascends with respect to the driving rotor 20, the reaction disk 1 can be held in a state of being supported by the protrusion portion 54 at a location where an operation of the screw 50 is stopped in a state in which the thread of the shaft portion 52 of the screw 50 is engaged with the screw hole of the shaft 22. In this way, the screw 50 functions as a retention mechanism that retains the reaction disk 1 in a state of being lifted up with respect to the driving rotor 20.

### - Setting Length of Guide 40 -

The length of the guide 40 is set so that a guide distance D2 of the reaction disk 1 by the guide 40 is equal to or greater than a difference distance D1 of a height between a lower end 11c of the reaction cell 11 and an upper end 7a of the in-chamber component in a state in which the reaction disk 1 comes into contact with the driving disk 21. The guide distance D2 is a distance by which the reaction disk 1 can ascend from the lowest position in the radial direction without shaking and is equal to a distance from a mask of the reaction disk 1 located at the lowest position (in the embodiment, a position at which the reaction disk 1 comes into contact with the driving disk 21) to a distal end of the guide 40 measured in the vertical direction. When D1 ≤ D2 is set, as illustrated in Fig. 7, an ascending trajectory of the reaction disk 1 is constantly guided vertically by the guide 40 until the lower end 11c of the reaction cell 11 ascends to the height of the upper end 7a of the churning mechanism 7 which is an in-chamber component. Accordingly, the reaction cell 11 is pulled up without interfering in the churning mechanism 7 disposed closely inside the reaction chamber 30.

In the case of the embodiment, a distance D3 (see Fig. 4) by which the screw 50 is screwed to the shaft 22 of the driving rotor 20 is necessarily set to be equal to or greater than a distance obtained by adding the distance G1 until the protrusion portion 54 comes into contact with the reaction disk 1 from the state of Fig. 4 to the guide distance D2 (D3 ≥ G1 + D2). In the example of Fig. 4, the distance D3 is equal to the length of the shaft portion 52 of the screw 50. That is, when the reaction cell 11 does not ascend by the distance (G1 + D2) from the state of Fig. 4, the reaction disk 1 is not dislocated from the guide 40. Therefore, the distance D3 equal to or greater than the distance (G1 + D2) is necessary when the reaction disk 1 is dislocated from the guide 40 with the shaft power of the screw 50. When the condition of (D3 2: G1 + D2) is satisfied, for example, the lower end 11c of the reaction cell 11 ascends up to the height of the upper end 7a of the churning mechanism 7, the operation of the screw 50 is stopped, and the reaction disk 1 is retained with the function of the above-described retention mechanism as in Fig. 7. Further, when the screw 50 is loosened, the reaction disk 1 is dislocated from the driving rotor 20 without interference of the reaction cell 11 in the in-chamber component with the reaction cell 11 being mounted.

### - Example of Exchange Procedure of Reaction Cell -

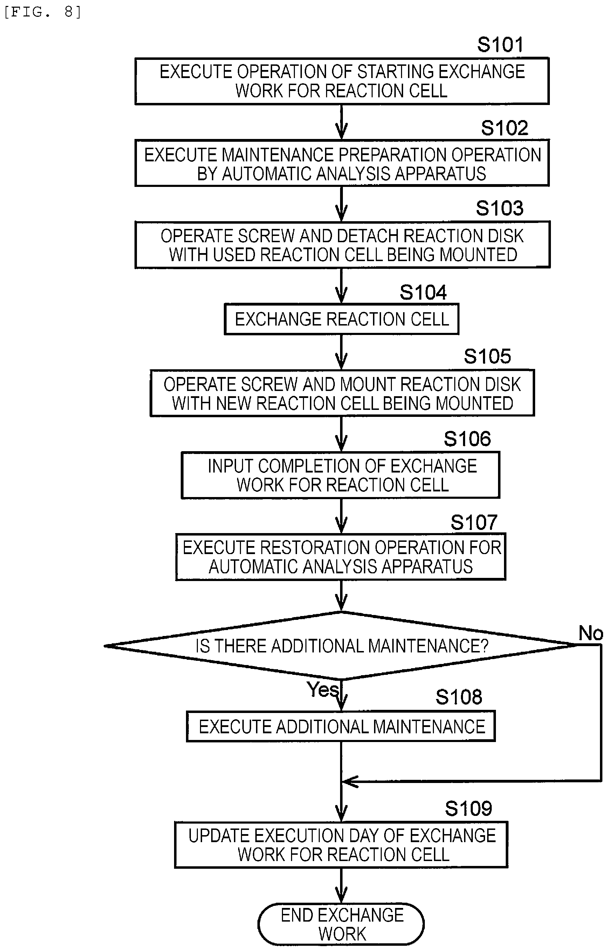

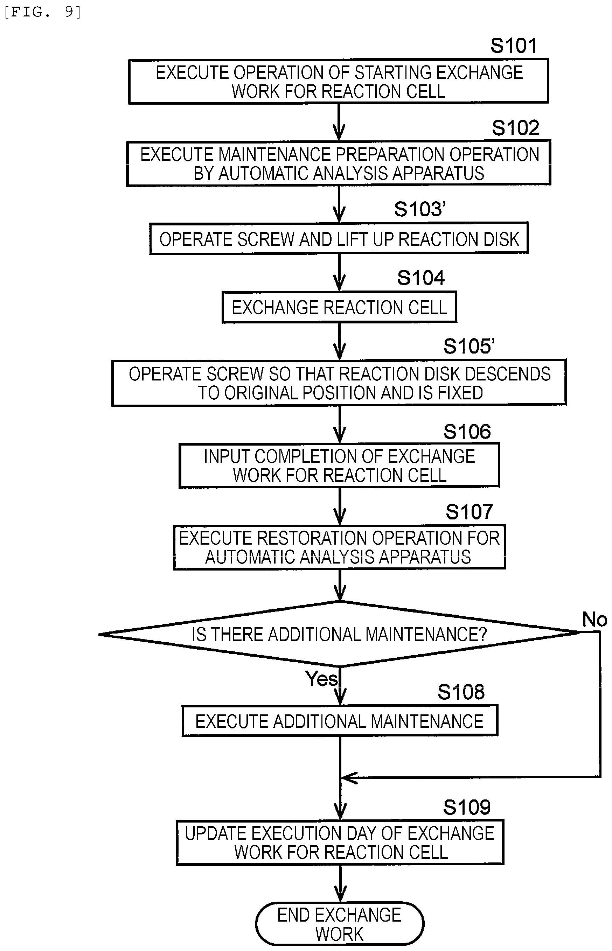

Fig. 8 is a flowchart illustrating an example of a procedure for exchange work of the reaction cell in the automatic analysis apparatus according to the first embodiment. Fig. 8 illustrates the procedure for exchange work of the reaction cell 11, but the light source lamp 8a can be exchanged in a similar procedure. By substituting the procedure for exchanging the reaction cell 11 in the description of Fig. 8 with a procedure for exchanging the light source lamp 8a, it is possible to change the description to description of the exchanging work for the light source lamp 8a. The same applies to the flowchart of Fig. 9 to be described below. In the following description, a case in which a user exchanges the reaction cell 11 will be described as an example. Another person such as a service person of a manufacturer of the automatic analysis apparatus 100 can, of course, execute the exchange work in a similar procedure. The same applies to Fig. 9 to be described below.

### • Step S101

When the exchange work for the reaction cell 11 is executed, a user first executes an operation of starting the exchange work for the reaction cell 11 from the user interface 302 (see Fig. 1).

At this time, when a final exchange day of the reaction cell 11 or a scheduled exchange day counted from the final exchange day is displayed on the monitor 301, the user can easily check whether a predetermined maintenance period (maintenance interval) has passed. In this case, when the scheduled exchange day has passed, the user can be notified of the fact that the scheduled exchange day has passed by means of display or an alarm sound.

### • Step S102

When the operation of starting the exchange work for the reaction cell 11 is executed, the control device 300 outputs an instruction to the controller 9 and causes the controller 9 to execute a maintenance preparation operation for the automatic analysis apparatus 100 in order to execute the exchange work for the reaction cell 11. An overview of the maintenance preparation operation is, for example, each of the following operations:
1. stopping circulation of the liquid of the reaction chamber 30;
2. stopping monitoring and control of a temperature and a liquid level of the liquid of the reaction chamber 30; and
3. demagnetizing the reaction disk 1 (rotation-free operation).

When an operation of starting the exchange work for the light source lamp 8a is executed in step S101, the control device 300 causes the controller 9 to turn off the light source lamp 8a as a part of the maintenance preparation operation.

The user may be notified that the maintenance preparation operation is completed, but the notification may not be executed. This is because each operation of the maintenance preparation is immediately completed when the operation of starting the exchange work of the reaction cell 11 is executed.

### • Step S103

When the maintenance preparation operation is completed by the automatic analysis apparatus 100, the user loosens the screw 50 and detaches the reaction disk 1 from the driving rotor 20 with the reaction cell 11 being mounted.

### • Step S104

When the reaction disk 1 is detached, the user detaches the used reaction cell 11 (the segment 11A) from the reaction disk 1 and mounts a new reaction cell 11 (segment 11A) on the reaction disk 1. When the exchange work for the light source lamp 8a is also executed, an operation of starting the exchange work for the light source lamp 8a is also executed in step S101 and the exchange work for the light source lamp 8a is executed along with the reaction cell 11.

### • Step S105

When the exchange of the reaction cell 11 is completed, the user aligns the centers of the reaction disk 1 and the driving rotor 20 and then the position of the pin hole 1a of the reaction disk 1 with the guide 40 to set the reaction disk 1 in the driving rotor 20 with the new reaction cell 11 being mounted. Then, the screw 50 is tightened to descend the reaction disk 1 and the screw 50 is tightened to the last to firmly fix the reaction disk 1 to the driving rotor 20.

### • Step S106

When the fixing of the reaction disk 1 is completed, the user inputs the completion of the exchange work for the reaction cell 11 from the user interface 302 (see Fig. 1).

### • Step S107

When the completion of the exchange work for the reaction cell 11 is input, the control device 300 outputs an instruction to the controller 9 and causes the controller 9 to execute a restoration operation for the automatic analysis apparatus 100 to the state before the exchange work for the reaction cell 11. The restoration operation is, for example, each of the following operations:
1. resuming the circulation of the liquid of the reaction chamber 30;
2. resuming the monitoring and the control of the temperature and the liquid level of the liquid of the reaction chamber 30;
3. supplementing a liquid to the reaction chamber 30 (as necessary); and
4. exciting the reaction disk 1 (releasing the rotation-free operation).

When the light source lamp 8a is turned off in step S102, the control device 300 causes the controller 9 to turn on the light source lamp 8a again as a part of the restoration operation.

### • Step S108

When there is additional maintenance such as cleaning of the reaction cell 11 or measurement of a blank value after the execution of the restoration operation, the controller 9 automatically executes this maintenance.

### • Step S109

After the additional maintenance of step S108 is executed (after the restoration operation of step S107 is executed when there is no additional maintenance), the user performs an update operation for a day in which the exchange work for the reaction cell 11 is executed with the interface 302 and ends the exchange work. Accordingly, the latest exchange date and time of the reaction cell 11 is recorded on a memory of the control device 300 (which may be a memory of the controller 9), a subsequent scheduled day of the reaction cell 11 is calculated and deadline management of the maintenance is resumed.

### - Another Example of Exchange Procedure of Reaction Cell -

Fig. 9 is a flowchart illustrating another example of the procedure for exchange work of the reaction cell in the automatic analysis apparatus according to the first embodiment of the present invention. Since the procedures of steps S101, S102, S104, and S106 to S109 of the flowchart illustrated in the drawing are the same as the procedures denoted by the same reference numerals of the flowchart of Fig. 8, description thereof will be omitted. Differences between the flow of Fig. 9 and the flow of Fig. 8 are that the procedure of steps S103 and S105 of Fig. 8 is substituted with the procedure of steps S103' and S105'. Hereinafter, the procedure of steps S103' and S105' will be described.

### • Step S103'

When the maintenance preparation operation by the automatic analysis apparatus 100 is completed in step S102, the user loosens the screw 50, lifts up the reaction disk 1 until the lower end 11c of the reaction cell 11 reaches about the height of the upper end 7a of the churning mechanism 7, and stops the operation on the screw 50 here. Accordingly, the reaction disk 1 is retained in a state in which the lower end 11c of the reaction cell 11 ascends up to the height of the upper end 7a of the churning mechanism 7. In this example, the procedure proceeds to step S104 continuing from this state and the user exchanges the reaction cell 11 (the segment 11A) in the state in which the reaction disk 1 is lifted up by a predetermined distance without detaching the reaction disk 1 from the driving rotor 20.

### • Step S105'

When the exchange of the reaction cell 11 ends in step S104, the user directly tightens the screw 50 as it is so that the reaction disk 1 descends and tightens the screw 50 to the last to fix the reaction disk 1 firmly to the driving rotor 20. Then, the procedure proceeds to the work of step S106. In the case of this example, since the reaction disk 1 is not detached from the driving rotor 20, the work for moving the reaction disk 1 to a place where the reaction cell 11 is exchanged or the work for aligning the position of the reaction disk 1 with the driving rotor 20 are not executed.

### - Cleaning Procedure of Reaction Chamber -

Next, a work procedure when reaction chamber cleaning is executed will be described.

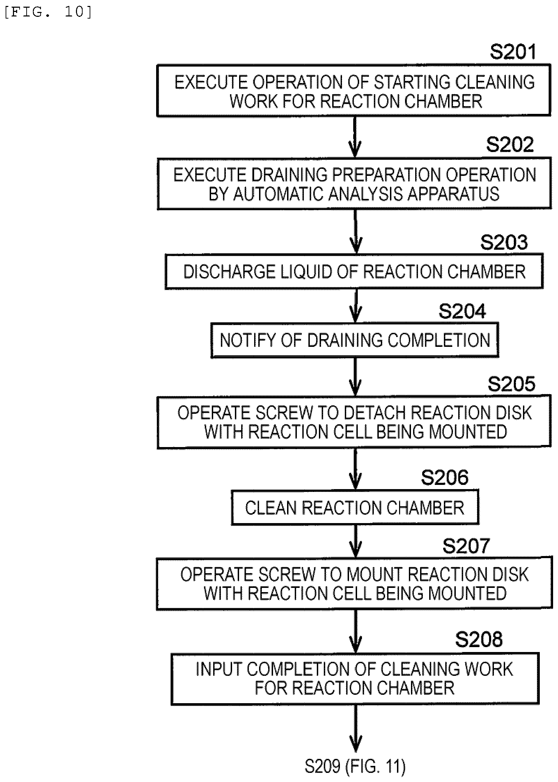

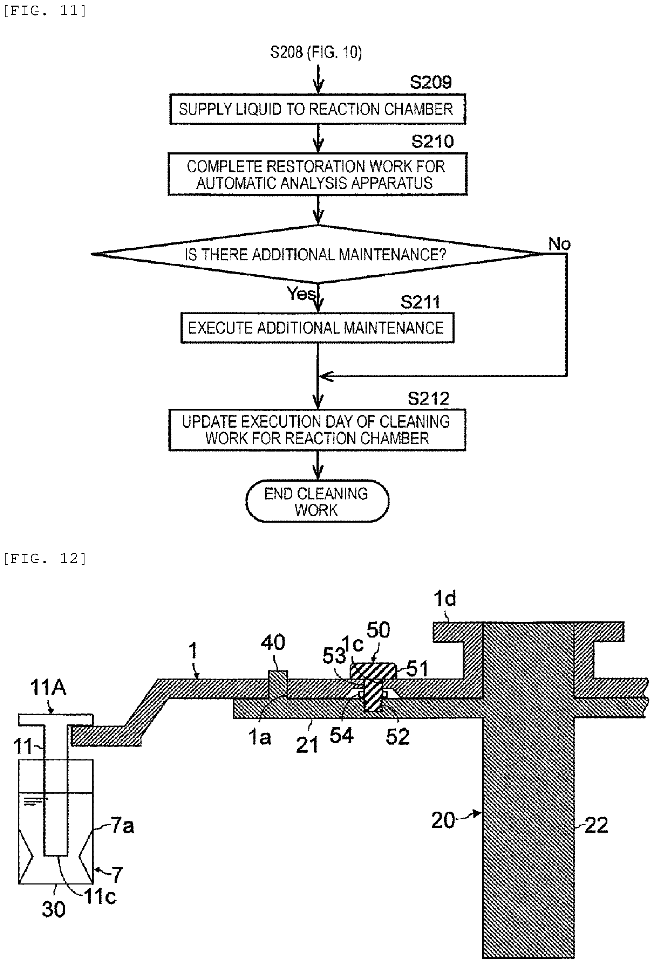

Figs. 10 and 11 are flowcharts illustrating an example of a procedure for cleaning work of the reaction chamber in the automatic analysis apparatus according to the first embodiment of the present invention.

### • Step S201

This step corresponds to cleaning work for the reaction chamber 30 and the user executes an operation of starting the cleaning work of the reaction chamber 30 from the user interface 302 (see Fig. 1).

At this time, when a final cleaning day of the reaction chamber 30 or a scheduled cleaning day counted from the final cleaning day is displayed on the monitor 301, the user can easily check whether a predetermined maintenance period (maintenance interval) has passed. In this case, when the scheduled cleaning day has passed, the user can be notified of the fact that the scheduled cleaning day has passed by means of display or an alarm sound.

### • Step S202

When the operation of starting the cleaning work for the reaction chamber 30 is executed, the control device 300 outputs an instruction to the controller 9 and causes the controller 9 to execute a draining preparation operation as a maintenance preparation operation of the automatic analysis apparatus 100 in order to execute the cleaning work for the reaction chamber 30. The draining preparation operation is similar to the maintenance preparation operation (step S102) at the time of exchange work for the reaction cell 11 and is, for example, the following operation.
1. stopping circulation of the liquid of the reaction chamber 30;
2. stopping monitoring and control of a temperature and a liquid level of the liquid of the reaction chamber 30;
3. demagnetizing the reaction disk 1 (rotation-free operation); and
4. turning off the light source lamp 8a.

An operation of interrupting excitation of the reaction disk 1 may be executed after the draining of the reaction chamber 30 is completed (after step S203) .

### • Step S203

When the draining preparation operation is executed, the controller 9 gives an instruction to open a drain valve (electromagnetic valve) provided in a drain pipe of the reaction chamber 30 and drains the liquid from the reaction chamber 30.

### • Step S204

When the draining of the reaction chamber 30 is completed, a signal is output from the controller 9 to the control device 300, and the control device 300 notifies the user of the draining completion by means of an alarm sound or monitor display. For example, when an opening time of the drain valve reaches a set value, the controller 9 can be caused to recognize the draining completion by the fact that a detection flow rate of a flowmeter provided in the drain pipe is less than a given value, a detected liquid level by a liquid level sensor provided in the reaction chamber 30 is less than a given value, or the like.

### - Step S205

When the notification of the draining completion is checked, the user loosens the screw 50 to detach the reaction disk 1 from the driving rotor 20 with the reaction cell 11 being mounted. This work is similar to step S103 of Fig. 8.

### • Step S206

When the reaction disk 1 is detached, the user cleans the reaction chamber 30. When the exchange work for the reaction cell 11 and the light source lamp 8a are executed together, an operation of starting the exchange work for the reaction cell 11 and the exchange work for the light source lamp 8a in step S201 is also executed. Then, the exchange work for the reaction cell 11 and the light source lamp 8a is executed in conjunction with the cleaning of the reaction chamber 30.

### • Step S207

When the cleaning of the reaction chamber 30 is ended, the user mounts the reaction disk 1 on the driving rotor 20 with the reaction cell 11 being mounted. This work is similar to step S105 of Fig. 8.

### • Step S208

When the fixing of the reaction disk 1 is ended, the user inputs the completion of the cleaning work for the reaction chamber 30 from the user interface 302 (see Fig. 1).

### • Step S209

When the completion of the cleaning work for the reaction chamber 30 is input, the control device 300 outputs an instruction to the controller 9 and the controller 9 is caused to execute the restoration operation of the automatic analysis apparatus 100 step by step to the state before the cleaning work for the reaction chamber 30. In step S209, for example, the following operations are executed all together as the restoration operation:
1. exciting the reaction disk 1 (releasing the rotation-free operation);
2. supplying the liquid to the reaction chamber 30; and
3. adding an antimicrobial or a detergent to the reaction chamber 30 (as necessary).

The work for turning on the excitation of the reaction disk 1 may be executed after the liquid is supplied to the reaction chamber 30 (step S210) .

### • Step S210

When the liquid is supplied to the reaction chamber 30, the controller 9 executes the remaining restoration operation of the automatic analysis apparatus 100. In step S210, for example, the following operations are executed all together as the remaining restoration operation:
1. resuming the circulation of the liquid of the reaction chamber 30;
2. resuming the monitoring and the control of the temperature and the liquid level of the liquid of the reaction chamber 30; and
3. turning on the light source lamp 8a.

### • Step S211

When there is additional maintenance such as cleaning of the reaction cell 11 or measurement of a blank value after the execution of the restoration operation, such maintenance is automatically executed by the controller 9. This process is similar to step S108 of Fig. 8.

### • Step S212

After the additional maintenance of step S211 is executed (after the restoration operation of step S211 is executed when there is no additional maintenance), the user executes an operation of updating the execution day of the cleaning work for the reaction chamber 30 with the interface 302 and ends the cleaning work. Accordingly, the latest cleaning date and time of the reaction chamber 30 is recorded on the memory of the control device 300 (which may be the memory of the controller 9), a subsequent scheduled cleaning day of the reaction chamber 30 is calculated, and deadline management of the maintenance is resumed.

### - Advantageous Effects -

(1) According to the embodiment, when the reaction disk 1 is moved vertically with respect to the driving rotor 20, the reaction disk 1 is guided by the guide 40 to be translated vertically. Accordingly, a deflection of the trajectory in the radial direction of the reaction disk 1 at the time of vertical movement can be inhibited. When the reaction disk 1 is mounted and detached with the reaction cell 11 being mounted, interference of the reaction cell 11 in the inner wall of the reaction chamber 30 or the in-chamber component inside the reaction chamber 30 can be inhibited. In the configuration in which the reaction disk 1 can be guided until the lower end 11c of the reaction cell 11 exceeds a liquid surface of the reaction chamber 30, the reaction disk 1 is temporarily retained in a state in which the reaction cell 11 is completely pulled up from the liquid and liquid drops attached to the external wall of the reaction cell 11 fall to the reaction chamber 30. In this case, thereafter, when the reaction disk 1 is detached from the driving rotor 20, interference in an electrical component of the automatic analysis apparatus 100 due to falling of the liquid drops attached to the external wall of the reaction cell 11 can be inhibited. Accordingly, it is possible to mount and detach the reaction disk 1 with the reaction cell 11 being mounted and execute efficient maintenance. Thus, when the reaction disk 1 is mounted and detached, it is possible to protect the reaction cell 11 or a peripheral component from damage.

Since vertical movement of the reaction disk 1 is smoothly guided by the guide 40, it is not necessary to lift up the reaction disk 1 while gradually moving the disk in the horizontal direction when the reaction disk 1 is detached or the like. Therefore, a workload of the user is also reduced, and shaking of the reaction disk 1 and the collision between an obstacle and a hand or the like do not occur.

Further, as described above, the liquid drops attached to the external wall of the reaction cell 11 can easily fall to the reaction chamber 30. Therefore, when the reaction disk 1 is detached, caution as to the flying liquid drops is not forced to be taken. The advantageous effect of reducing a mental workload of the user can be expected.

(2) In the embodiment, the guide distance D2 of the reaction disk 1 by the guide 40 is set to be equal to or greater than the difference distance D1 of the height between the lower end 11c of the reaction cell 11 and the upper end 7a of the in-chamber component (in the example of Fig. 4, the churning device 7). Therefore, as long as the reaction cell 11 has a positional relationship with the in-chamber component overlapping in the radial direction of the reaction disk 1 (when the lower end 11c is lower than the upper end 7a), a movement of the reaction disk 1 in the radial direction is normally restricted in the guide 40. Accordingly, when the reaction disk 1 is mounted and detached with the reaction cell 11 being mounted, interference between the reaction cell 11 and the in-chamber component can be inhibited in terms of a mechanical structure.

(3) Since the distance D3 (see Fig. 4) in which the screw 50 is screwed to the driving rotor 20 is set to be longer than the guide distance D2 (the same), the reaction disk 1 can be retained in a state in which the reaction disk 1 is lifted up to the height at which the reaction disk 1 is dislocated from the guide 40. Meanwhile, the reaction disk 1 retains the self-standing state, and thus it is not necessary for the user or the like to hold the reaction disk 1 with a hand. Accordingly, even when the reaction disk 1 is not detached from the driving rotor 20, as described with reference to Fig. 9, the reaction cell 11 can be lifted up to a height at which there is no interference with the in-chamber component to execute the exchange work for the reaction cell 11. Since movement of the detached reaction disk 1 or positioning work of the detached reaction disk 1 at the time of reassembly can be omitted, it is possible to execute the exchange work for the reaction cell 11 more efficiently.

(4) The screw 50 functions as a lift mechanism, a shaft force of the screw 50 can act on the reaction disk 1 to translate the reaction disk 1 vertically with respect to the driving rotor 20. A force can be perpendicularly operated to the reaction disk 1. Thus, compared to a case in which the reaction disk 1 is lifted up and down with a hand, force dissipation in the horizontal direction is considerably small and high linearity can be achieved because of the elevation trajectory of the reaction disk 1.

(5) By adopting a screw 50 screwed to the driving rotor 20 in relation to the reaction disk 1 as a lift mechanism, the screw 50 serves as both a lift mechanism and a fixing mechanism of the reaction disk 1. The screw is an element used for positioning in general machine and can also serve as a retention mechanism. According to the embodiment, one screw 50 makes it possible to construct a fixing mechanism, a lift mechanism, and a retention mechanism of the reaction disk 1 considerably simply. Since the screw 50 is located at the center of the reaction disk 1, the head portion 51 of the screw 50 may be used in place of a grip when the screw 50 is excluded from the driving rotor 20 and the reaction disk 1 is carried with the reaction cell 11 being mounted. Since one screw 50 is used, a load of work for tightening or loosening the screw is light.

(6) When the screw 50 is tightened, the reaction disk 1 comes into contact with the driving rotor 20 and the protrusion portion 54 becomes away from the reaction disk 1. When the screw 50 is loosened, the protrusion portion 54 lifts up the reaction disk 1. While the screw 50 is tightened, the protrusion portion 54 becomes away from the reaction disk 1. Therefore, the reaction disk 1 can be pressed firmly by the head portion 51 finally. At this time, when a gap is formed between the protrusion portion 54 and the driving rotor 20 in a state in which the head portion 51 comes into contact with the upper surface of the reaction disk 1, the reaction disk 1 can be pressed firmly by the head portion 51 more reliably.

### (Second Embodiment)

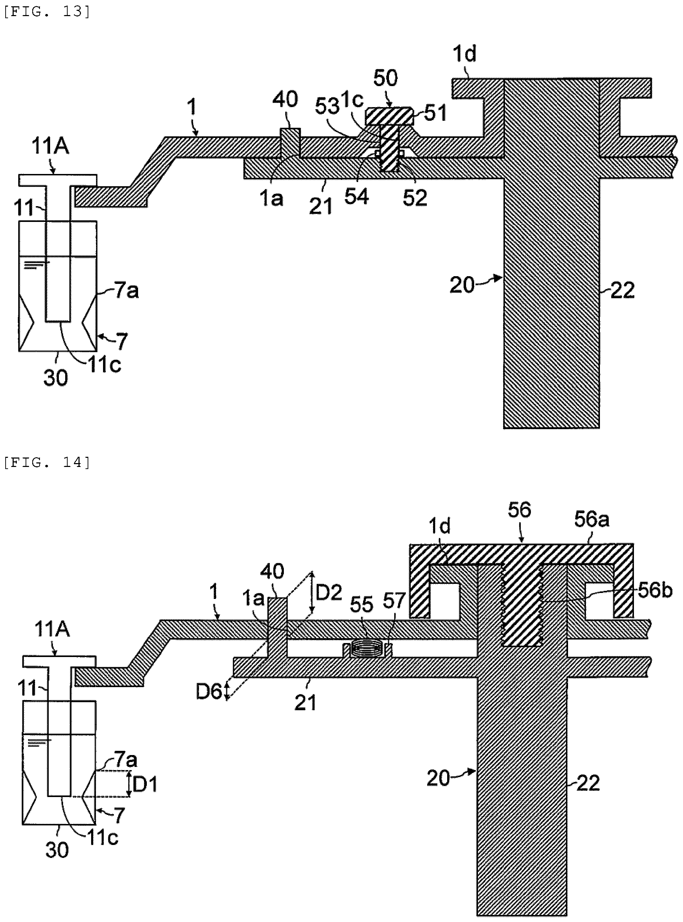

Figs. 12 and 13 are sectional views illustrating a reaction disk and peripheral components included in an automatic analysis apparatus according to a second embodiment of the present invention and taken along a plane including a rotational center line of the reaction disk and correspond to Fig. 4 of the first embodiment. Fig. 12 illustrates one configuration example according to the second embodiment and Fig. 13 illustrates another configuration example according to the second embodiment. In Figs. 12 and 13, the same reference numerals as those of the above-described drawings are given to the similar or corresponding elements to those of the first embodiment, and description thereof will be omitted.

Differences between the present embodiment and the first embodiment are that only one screw 50 is used in the first embodiment and a plurality of screws 50 are disposed in the present embodiment. The configuration of the screw 50 is similar to that of the first embodiment and the screw 50 includes a head portion 51, a shaft portion 52, a body portion 53, and a protrusion portion 54.

In the embodiment, screw holes corresponding to the plurality of screws 50 are disposed at positions other than the center of the shaft 22 of the driving rotor 20 and are all formed in the driving disk 21. A through hole 1b through which each screw 50 passes is disposed in a surface facing to the driving disk 21 in the reaction disk 1 to correspond to these screw holes. The number of screws 50 may be plural, and from the viewpoint of stability of the fixing structure, three or more screws 50 are preferably disposed to define a virtual plane. Here, as the number of screws 50 is larger, an effort to operate the screws 50 when the reaction disk 1 is mounted and detached is greater. Therefore, in consideration of this, three screws 50 or the screws slightly more than the three screws are preferable.

The plurality of screws 50 are disposed, for example, at an equal distance in a circumferential direction on a virtual circle concentric with the driving rotor 20 so that a center of gravity of an assembly of the reaction disk 1 and the driving rotor 20 does not deviate from a central line of the shaft 22. When three screws 50 with the same weight are used, a layout of a 120-degree pitch is achieved. A positional relationship with the guide 40 is not particularly limited. As described in the first embodiment, since the guide 40 is disposed to be separated from the central line of the shaft 22 from the viewpoint of positioning accuracy of the reaction disk 1, the screws 50 are disposed closer to the shaft 22 than the guide 40 in the example of Figs. 12 and 13. Here, from the viewpoint of support of an inertial force at the time of initial rotation or stopping of the reaction disk 1, it is advantageous that the screws 50 are away from the shaft 22. For example, the guide 40 and the screws 50 can be disposed on the same virtual circle concentric with the driving rotor 20.

Since the facing surfaces of the reaction disk 1 and the driving disk 21 come into contact with each other as in the first embodiment, a recessed portion (hand reeling) facing the driving disk 21 is provided in a penetration portion of the through hole 1b in the reaction disk 1 in the present embodiment. As in the first embodiment, a gap in which the protrusion portion 54 is moved is formed between the protrusion portion 54 and the reaction disk 1. The recessed portion is, for example, circular when viewed from the side of the driving disk 21 and the number of recessed portions is plural to correspond to the screws 50. In Fig. 12, the configuration in which the plate thickness of the portion in which the recessed portion in the reaction disk 1 is formed is thinner than the plate thickness of the peripheral portion is exemplified. In Fig. 13, however, a configuration in which the upper surface of the reaction disk 1 is heaped up to correspond to the recessed portion is exemplified. From the viewpoint of inhibition of a decrease in the strength of the reaction disk 1 in the portion in which the recessed portion is provided, the example of Fig. 13 is advantageous. From the viewpoint of a reduction in the weight of the reaction disk 1, the example of Fig. 12 is advantageous.

In the embodiment, since it is not necessary to press the center of the reaction disk 1 with the screw 50, a configuration in which a central portion of the reaction disk 1 is penetrated by the shaft 22 of the driving rotor 20 is exemplified. A handle 1d is provided in the upper end of a cylindrical portion through which the shaft 22 penetrates in the reaction disk 1, and thus it is easy to carry the reaction disk 1 when the screw 50 is removed from the driving rotor 20. Although particularly not illustrated, it is preferable to attach positioning marks defining a positional relation in a mutual circumferential direction to the cylindrical portion of the center of the reaction disk 1 and the upper end surface of the shaft 22.

Except for the above-described configuration, the present embodiment has the similar configuration with those of the first embodiment, the advantageous effects obtained in the first embodiment can be obtained by the common configuration in the present embodiment. Since the number of screws 50 is plural and the screws 50 are distant from the rotation center by a given distance, there is also the advantage of adding stability of the fixed structure of the reaction disk 1.

Further, as described above, the shaft 22 of the driving rotor 20 can be configured to penetrate through the center of the reaction disk. Therefore, the user can expose a part of the driving rotor 20 from the hole of the center of the reaction disk 1. Therefore, as described above, when the positioning marks are attached to the reaction disk 1 and the upper end surface of the shaft 22, work for positioning the guide 40 and the pin hole 1a at the time of setting of the reaction disk 1 in the driving rotor 20 can be efficiently executed. Here, this is the incidental advantage in one configuration example of the reaction disk 1 illustrated in Figs. 12 and 13. In the present embodiment, the fundamental effects are not lost even in a configuration in which the upper portion of the shaft 22 is covered with the reaction disk 1 as in the first embodiment.

### (Third Embodiment)

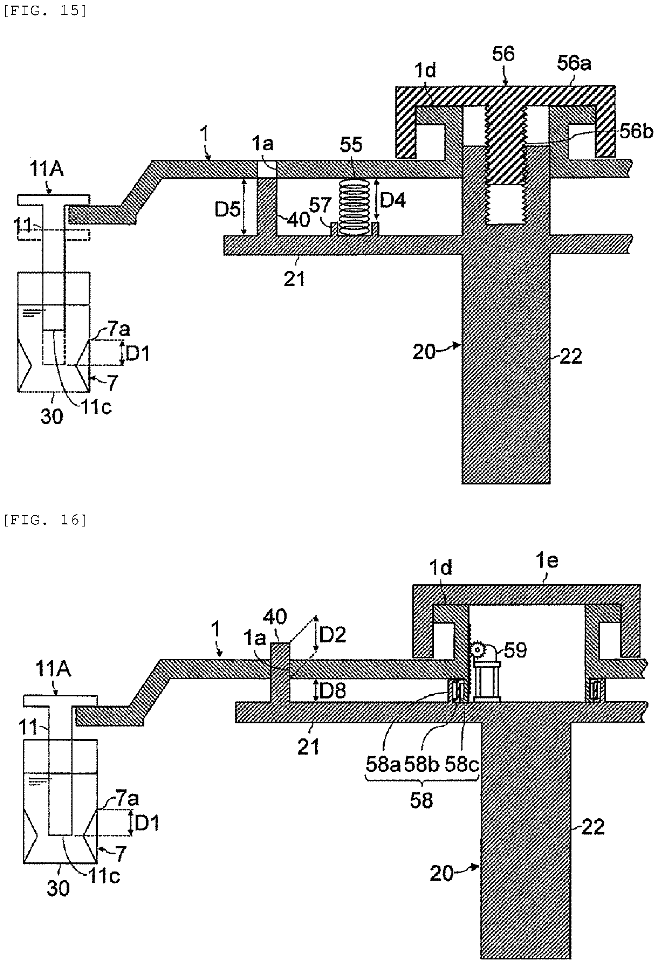

Fig. 14 is sectional view illustrating a reaction disk and peripheral components included in an automatic analysis apparatus according to a third embodiment of the present invention and taken along a plane including a rotational center line, of the reaction disk, corresponds to Fig. 4 of the first embodiment, and corresponds to Figs. 12 and 13 of the second embodiment. Fig. 15 is a diagram illustrating a state in which the reaction disk is lifted up from the state illustrated in Fig. 14 and corresponds to Fig. 7 of the first embodiment. In Figs. 14 and 15, the same reference numerals as those of the above-described drawings are given to the similar or corresponding elements to those of the first or second embodiment, and description thereof will be omitted.

Differences of the present embodiment and the first embodiment are that the screw 50 configures the lift mechanism or the like in the first embodiment and a fixing mechanism, a lift mechanism, and a retention mechanism include a spring 55 and a screw 56 in the present embodiment. In the present embodiment, the screw 50 adopted in the first and second embodiments is omitted in the present embodiment.

The spring 55 is a spring (in the embodiment, a coil spring) that is expandable in the vertical direction, and is interposed between the reaction disk 1 and the driving rotor 20 (in the embodiment, the driving disk 21), and is sandwiched and compressed vertically between the reaction disk 1 and the driving rotor 20. Accordingly, a restoration force of the spring 55 acts as a force for pushing up the reaction disk 1 with respect to the driving rotor 20.

Only one end of the vertical sides of the spring 55 is fixed to the lower surface of the reaction disk 1 or the upper surface of the driving rotor 20. In the embodiment, a cylindrical spring guide 57 that guides expansion and contraction of the spring 55 is provided and the outer circumference of the spring 55 is covered with the spring guide 57 at the time of full contraction in Fig. 14. Only one end of the vertical sides of the spring guide 57 is fixed to the lower surface of the reaction disk 1 or the upper surface of the driving rotor 20. In the embodiment, a configuration in which the spring guide 57 is fixed to the driving rotor 20 is exemplified. However, a configuration in which the spring guide 57 is provided in the reaction disk 1 may be provided.

The number of installed springs 55 can be singular or plural. When the number of springs 55 is singular, for example, a configuration in which a coil spring that has an inner diameter greater than an outer diameter of the shaft 22 is adopted and the spring 55 is covered in the shaft 22 from above to be interposed between the driving disk 21 and the reaction disk 1 can be exemplified. In this way, by disposing the spring 55 to be concentric with the reaction disk 1, a vector of a pushing-up force acting on the reaction disk 1 by the restoration force of the spring 55 can be set to be perpendicular upward. When the number of springs 55 is plural, three or more springs 55 are preferably disposed to define a virtual plane from the viewpoint of stability of the support structure of the reaction disk 1 by the spring 55. The plurality of springs having the same size, shape, and restoration force are preferably arranged at an equal distance in a circumferential direction on a virtual circle concentric with the driving rotor 20. This is because the vector of the pushing-up force acting on the reaction disk 1 by the restoration force of the spring 55 can be set to be perpendicular upward. Figs. 14 and 15 illustrate an example in which the plurality of springs 55 are used.

The screw 56 is screwed to the driving rotor 20 perpendicularly downward to press the reaction disk 1 from above. The screw 56 includes a head portion 56a and a shaft portion 56b and does not include an element (an element corresponding to the protrusion portion 54 of the screw 50 in the first embodiment) that restricts the screw 56 with respect to the reaction disk 1. The body portion may be included or not included. In the embodiment, the shaft portion 56b is located on a central line of the shaft 22, and is screwed to the shaft 22 from the upper end surface. The head portion 56a is formed in a cover shape covering the upper surface and the outer circumferential surface of the handle 1d of the reaction disk 1, but the shape can be changed as long as the head portion 56a interferes in a part of the upper surface of the reaction disk 1 and presses the reaction disk 1. In Figs. 14 and 15, the reaction disk 1 has the same shape as that of the third embodiment, but may have the shape covering the upper portion of the shaft 22 of the driving rotor 20 as in the first or second embodiment.

The distance D4 by which the spring 55 expands is preferably equal to or greater than the above-described difference distance D1. The same applies to the guide distance D2 by which the guide 40 guides the reaction disk 1. A distance D5 (see Fig. 15) from a base end of the guide 40 (the upper surface of the driving disk 21) to a distal end (the upper end) of the guide 40 is preferably equal to or greater than a sum of a distance D6 (see Fig. 14) and the distance D4 (D5 ≥ D4 + D6). The distance D6 is an empty distance between the facing surfaces of the reaction disk 1 and the driving disk 21 in a state (see Fig. 14) in which the reaction disk 1 is fixed to the driving disk 21.

In the foregoing configuration, when the screw 56 is tightened, the reaction disk 1 is pressed with the head portion 56a to descend against the restoration force of the spring 55 in the embodiment. By tightening the screw 56 to the last, reaction disk 1 can be fixed to the driving rotor 20, as illustrated in Fig. 14. When the screw 56 is loosened, the reaction disk 1 ascends by the restoration force of the spring 55 to the degree that the screw 56 is loosened. By loosening the screw 56 more than a given degree, the reaction disk 1 is lifted up to a height at which the reaction disk 1 is dislocated from the guide 40, as illustrated in Fig. 15.

In the first and second embodiments, the shaft force of the screw 50 is used as the force for lifting up the reaction disk 1 and the own weight of the reaction disk 1 is used as the force for causing the reaction disk 1 to descend. On the other hand, in the embodiment, the shaft force of the screw 56 is used as the force for causing the reaction disk 1 to descend and the restoration force of the spring 55 is used as the force for lifting up the reaction disk 1.

In the embodiment, by operating the screw 56, it is also possible to move up and down the reaction disk 1 by the shaft force of the screw 56 and the restoration force of the spring 55 and it is possible to guide the vertical movement trajectory of the reaction disk 1 perpendicularly by the guide 40 as in the first and second embodiments. Accordingly, it is possible to mount and detach the reaction disk 1 with the reaction cell 11 being mounted and execute efficient maintenance. Thus, when the reaction disk 1 is mounted and detached, it is possible to protect the reaction cell 11 or peripheral components from damage.

Except for the above-described configuration, the configuration of the present embodiment is the same as the configuration of the first or second embodiment. With the common configuration, the advantageous effects obtained in the first or second embodiment can also be obtained in the present embodiment.

### (Fourth Embodiment)

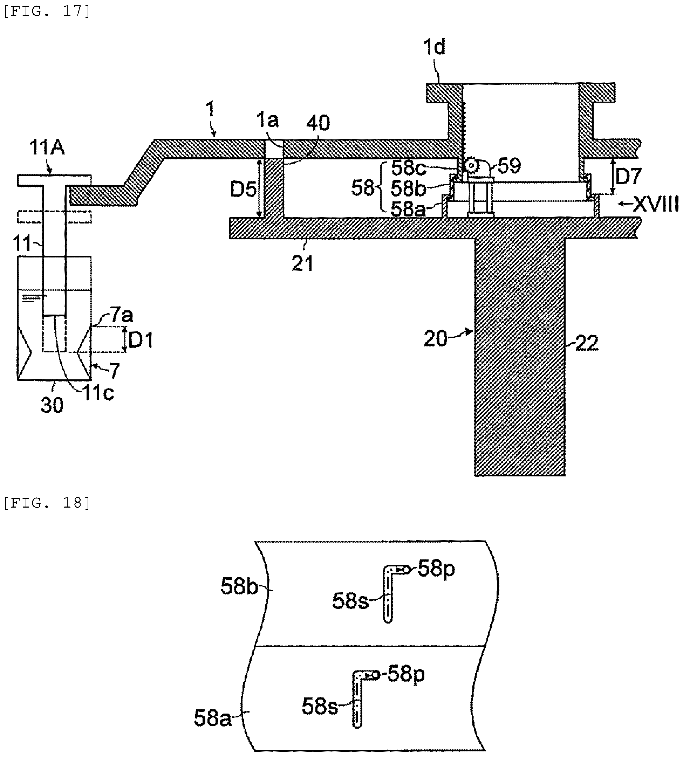

Fig. 16 is a sectional view illustrating a reaction disk and peripheral components included in the automatic analysis apparatus according to a fourth embodiment of the present invention and taken along a plane including a rotational center line of the reaction disk and corresponds to Fig. 4 of the first embodiment, Figs. 12 and 13 of the second embodiment, and Fig. 14 of the third embodiment. Fig. 17 is a diagram illustrating a state in which the reaction disk is lifted up from the state illustrated in Fig. 16 and corresponds to Fig. 7 of the first embodiment or Fig. 15 of the third embodiment. Fig. 18 is a partial arrow view taken along an arrow XVIII of Fig. 17. In Figs. 16 to 18, the same reference numerals as those of the above-described drawings are given to the similar or corresponding elements to those of the first to third embodiments, and description thereof will be omitted.

Differences between the present embodiment and the first to third embodiments are that the reaction disk 1 is connected to the driving disk 21 via a telescopic mechanism 58. The telescopic mechanism 58 is interposed between the reaction disk 1 and the driving disk 21, includes a plurality of pipes 58a to 58c, and expands and contracts in a perpendicular direction. Specifically, the central pipe 58b can be accommodated to enter and exit from the outer pipe 58a and the inner pipe 58c can be accommodated to enter and exit from the pipe 58b. The outer pipe 58a is fixed to the upper surface of the driving rotor 20 and the inner pipe 58c is fixed to the reaction disk 1. An upper limit position of a movable range of the pipe 58b to the pipe 58a and an upper limit position of a movable range of the pipe 58c to the pipe 58b are limited by each stopper, as illustrated in Figs. 16 and 17. Fig. 17 illustrates a state in which the reaction disk 1 is lifted up to the upper limit. The reaction disk 1 is restricted by the telescopic mechanism 58 as long as the telescopic mechanism 58 is not detached so that the reaction disk 1 is not lifted up from the state of the drawing.

In the present embodiment, the reaction disk 1 has a shape similar to that of the third embodiment. In the driving rotor 20, the shaft 22 protrudes from the driving disk 21 to only the lower side, and the upper end surface of the shaft 22 is flush with the upper surface of the driving disk 21. Accordingly, a space is ensured inside a cylindrical portion of the center of the reaction disk 1.

Figs. 16 and 17 exemplify a configuration in which an actuator 59 is used as a lift mechanism pushing up the reaction disk 1 with respect to the driving rotor 20. In the embodiment, a lift mechanism of the reaction disk 1 using the shaft force of the screw or the restoration force of the spring is not adopted. The actuator 59 can be installed in a space ensured inside the cylindrical portion of the center of the reaction disk 1. In the actuator 59, a cylinder can be used. In the embodiment, however, a configuration in which an electric motor is used is exemplified. When an electric motor is used, for example, a structure in which a ball screw passing through a nut attached to the reaction disk 1 is rotated by the actuator 59 fixed to the driving rotor 20 can be used. In the embodiment, however, a configuration in which a rack-and-pinion is driven by an electric motor is exemplified. The rack-and-pinion is a type of gear that converts a rotary motion into a rectilinear motion and is formed by combining a pinion with a rack in which a bar-shaped member is toothed. In the example of Figs. 16 and 17, the rack is mounted at a perpendicularly extending posture on an inner wall of the cylindrical portion of the center of the reaction disk 1, and a pinion attached to an output shaft of the electric motor serving as the actuator 59 is meshed with the rack. The actuator 59 is fixed to the driving disk 21 via a bracket.

When the actuator 59 is driven to normally rotate the pinion, the rack ascends with respect to the pinion and the reaction disk 1 ascends with respect to the driving rotor 20. Conversely, when the actuator 59 reversely rotates the pinion, the rack descends with respect to the pinion and the reaction disk 1 descends with respect to the driving rotor 20. The actuator 59 is controlled by the controller 9. Since there is a braking force of the output shaft in the actuator 59, the actuator 59 can also function as not only a lift mechanism but also a fixing mechanism or a retention mechanism of the reaction disk 1.

In the embodiment, for example, a configuration in which the actuator 59 is omitted and the handle 1d is included to lift up the reaction disk 1 can also be used. Although the actuator 59 is omitted, the elevation trajectory of the reaction disk 1 is guided by the guide 40. Therefore, it is possible to appropriately inhibit interference or the like of the reaction cell 11 and peripheral components. When the actuator 59 is adopted, a lid is not particularly necessary. In the case of the configuration in which the handle 1d is included to lift up the reaction disk 1, it is preferable to provide a lid 1e covering the handle 1d so that the reaction disk 1 is not lifted up erroneously except for maintenance. The lid 1e may be configured to cover the handle 1d. However, a configuration in which the lid is not engaged with the reaction disk 1 and the reaction disk 1 is not lifted up in relation to the lid 1e even when the lid 1e is lifted up is preferable (see Fig. 16).

A distance D7 by which the telescopic mechanism 58 expands is preferably equal to or greater than the above-described difference distance D1. The same applies to the guide distance D2 by which the guide 40 guides the reaction disk 1. The distance D5 (see Fig. 17) from a base end of the guide 40 (the upper surface of the driving disk 21) to a distal end (the upper end) of the guide 40 is preferably equal to or greater than a sum of a distance D8 (see Fig. 16) and the distance D7 (see Fig. 17) (D5 ≥ D7 + D8). The distance D8 is an empty distance between the facing surfaces of the reaction disk 1 and the driving disk 21 in a state (see Fig. 16) in which the reaction disk 1 is fixed to the driving disk 21.

According to the embodiment, as a further retention mechanism of the reaction disk 1, a lock mechanism in which a slit 58s and a protrusion 58p are used is provided in the telescopic mechanism 58, as illustrated in Fig. 18. The slit 58s is formed in one of two pipes that are engaged with each other among pipes included in the telescopic mechanism 58, and the protrusion 58p inserted into the slit 58s is formed in the other pipe. Specifically, the slit 58s has an L shape by a portion extending in the perpendicular direction and a portion extending from the upper end of the portion in the horizontal direction. In the embodiment, the slit is formed in each of the pipes 58a and 58b. The protrusion 58p is, for example, a short columnar pin and protrudes from the outer circumferential surface of the pipes 58b and 58c to the outside in the radial direction in the embodiment. The protrusion 58p of the pipe 58c is inserted into the slit 58s of the pipe 58b and the protrusion 58p of the pipe 58b is inserted into the slit 58s of the pipe 58a. When the telescopic mechanism 58 is extended longest and is twined in a circumferential direction, as indicated by a two-dot chain arrow in Fig. 18, the protrusion 58p moves inside the slit 58s in the L shape to be moved to a horizontal portion of the slit 58s. Accordingly, the extension and contraction of the telescopic mechanism 58 are locked, and the reaction disk 1 is stably retained in the lifted state.

Except for the above description, in the embodiment, the configurations similar to those of the first, second, or third embodiment can be used.

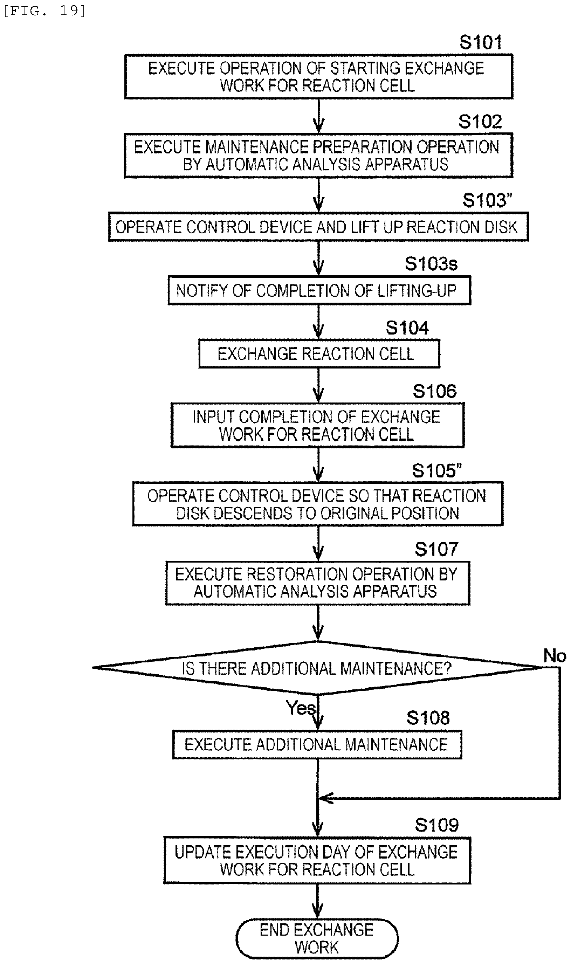

Fig. 19 is a flowchart illustrating an example of a procedure for exchange work of the reaction cell in the automatic analysis apparatus according to the fourth embodiment of the present invention. Since the procedures of steps S101, S102, S104, and S106 to S109 of the flowchart illustrated in the drawing are the same as the procedures denoted by the same reference numerals of the flowcharts of Figs. 8 and 9 described in the first embodiment, the description thereof will be omitted. Here, after the reaction cell 11 is exchanged in step S104, the procedures of steps S105" and S106 corresponding to steps S105 and 106 of the first embodiment are reversed. Differences between the flow of Fig. 19 and the flow of Fig. 8 are that, for example, the procedure of steps S103 and S105 of Fig. 8 are substituted with the procedure of steps S103" and S105" and a step S103s is added between steps S103" and S104. Hereinafter, the procedure of steps S103", S103s, and S105" will be described.

### • Step S103"

When the maintenance preparation operation of step S102 is completed, the user executes an operation of lifting up the reaction disk 1 from the user interface 302 (see Fig. 1). When the operation of lifting up the reaction disk 1 is executed, the control device 300 outputs an instruction to the controller 9 and drives the actuator 59 to lift up the reaction disk 1.

### • Step S103s

When the reaction disk 1 ascends up to a predetermined height at which maintenance is possible, a signal is output from the controller 9 to the control device 300, and the control device 300 notifies the user of the lifting-up completion of the reaction disk 1 by means of an alarm sound or monitor display. The ascending of the reaction disk 1 to the predetermined height can be determined from, for example, a rotation speed or a driving time of the actuator 59. The rotation speed of the actuator is a known constant value and the driving time can be measured by a timer included in the controller 9. An ascending distance of the reaction disk 1 can also be calculated from a rotation speed (meaning the number of rotations) of the output shaft of the actuator 59. A limit switch can also be installed in the telescopic mechanism 58, and when a signal is input from the limit switch, it can be detected that the telescopic mechanism 58 extends by a predetermined length and the reaction disk 1 reaches a predetermined height. When a notification of the lifting-up completion is checked, the procedure proceeds to step S104 and the user executes the exchange work for the reaction cell 11. In the embodiment, since the reaction disk 1 is not dislocated from the driving rotor 20, the reaction cell 11 is exchanged without detaching the reaction disk 1 from the driving rotor 20.

### • Step S105"

When the exchange of the reaction cell 11 is completed in step S104, the user inputs the completion of the exchange work for the reaction cell 11 from the user interface 302 (see Fig. 1) (step S106). In the embodiment, an instruction is output from the control device 300 to the controller 9 using the input of the completion of the exchange work as a trigger, and the actuator 59 is driven and the reaction disk 1 descends (step S105"). When the descending operation for the reaction disk 1 is completed, the restoration operation of step S107 is continuously executed (step S107). The restoration operation has been described in the first embodiment and the subsequent procedures are the same as those of the first embodiment.

In the embodiment, the vertical movement of the reaction disk 1 is guided perpendicularly by the guide 40 and it is possible to mount and detach the reaction disk 1 with the reaction cell 11 being mounted and execute efficient maintenance. Thus, when the reaction disk 1 is mounted and detached, it is possible to protect the reaction cell 11 or peripheral components from damage. At this time, in the embodiment, since the actuator 59 moves up and down the reaction disk 1, it is possible to reduce a load of a user necessary in the maintenance work. Since the driving rotor 20 and the reaction disk 1 are connected by the telescopic mechanism 58, the reaction disk 1 does not come out from the driving rotor 20 unintentionally. In addition, the advantageous effects obtained in the first to third embodiments with regard to the configurations common to those of the first to third embodiments can also be obtained in the present embodiment.

### (Fifth Embodiment)

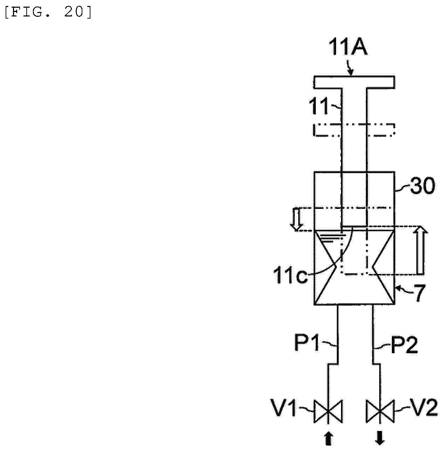

Fig. 20 is a schematic view illustrating a reaction chamber and peripheral components included in an automatic analysis apparatus according to a fifth embodiment of the present invention. The embodiment relates to liquid level control of the reaction chamber 30 at the time of exchange work for the reaction cell 11.

In the embodiment, a feed valve V1 is included in a feed pipe P1 connected to the reaction chamber 30 and a drain valve V2 is included in a drain pipe P2 connected to the reaction chamber 30. The feed valve V1 and the drain valve V2 are, for example, electromagnetic valves, and opening and closing are controlled by the controller 9.

In the embodiment, even in a state in which the reaction disk 1 ascends highest in a range of the guide distance D2 (see Fig. 4 or the like), it is assumed that a height of the lower end 11c of the reaction cell 11 does not exceed a liquid level of the liquid stored inside the reaction chamber 30 in an analysis operation. That is, in a state in which the liquid level is retained at the time of the analysis operation, the lower portion of the reaction cell 11 remains to be dipped even when the reaction disk 1 is caused to ascend by the guide distance D2.

Accordingly, in the embodiment, the controller 9 is configured to control the drain valve V2 at a predetermined timing such that the liquid level of the reaction chamber 30 is lowered to the lower end 11c of the reaction cell 11 ascending highest within the range of the guide distance D2 or a position lower than the lower end 11c. In Fig. 20, an upward arrow indicates an increase of the reaction cell 11 and a downward arrow indicates a decrease of the liquid level. The liquid level after the decrease is preferably close to the lower end of the reaction cell 11 after the increase. For example, an upper end of an in-chamber component (the churning mechanism 7 in Fig. 20) or a degree slightly lower than the upper end can be exemplified. The liquid is not completely discharged from the reaction chamber 30. When a signal indicating an instruction to start maintenance is input from the control device 300, the controller 9 executes an operation of lowering the liquid level in association with, for example, the maintenance preparation operation of step S102 (see Figs. 8, 9, and 19). For a decrease amount of the liquid level, for example, a method of controlling an opening time of the drain valve V2 (opening the drain valve V2 for a set time) or a method of installing a liquid level sensor in the reaction chamber 30 and controlling opening and closing of the drain valve V2 based on a liquid level detected by the liquid level sensor can be applied.

After the maintenance is completed, the controller 9 controls the feed valve V1 to raise the liquid level to a height before the draining. The operation of raising the liquid level is executed in association with, for example, the restoration operation of step S107 (see Figs. 8, 9, and 19). For an increase amount of the liquid level, for example, a method of controlling an opening time of the feed valve V1 (opening the feed valve V1 for a set time) or a method of installing a liquid level sensor in the reaction chamber 30 and controlling opening and closing of the feed valve V1 based on a liquid level detected by the liquid level sensor can be applied.

Except for the above description, in the embodiment, the configurations similar to those of the first, second, third, or fourth embodiment can be used.

In the embodiment, the work of pulling up all the reaction cells 11 from the liquid of the reaction chamber 30 and temporarily retraining the reaction cells 11 can be automatically executed in association with the maintenance preparation operation for the automatic analysis apparatus 100 without being performed manually by the user. That is, since the user completes the dehydrating step for an external wall of the reaction cell 11 in a stage in which the reaction disk 1 is detached from the driving rotor 20, it is possible to inhibit interference of liquid drops falling from the external wall of the reaction cell 11 in electric components at the time of detaching of the reaction disk 1 more rationally. Accordingly, it is possible to reduce a psychological load of the user at the time of the maintenance work or a load of work for wiping out flying liquid drops.

Compared to a case in which the liquid is all discharged from the reaction chamber 30, it is possible to inhibit a required time of the maintenance preparation operation or the restoration operation from becoming long by stopping a draining amount of the liquid at a required amount, and thus it is possible to shorten a series of maintenance times. A consumption amount of the liquid is also reduced. In addition, the advantageous effects obtained in the first to fourth embodiments with regard to the configurations common to those of the first to fourth embodiments can also be obtained in the present embodiment.

### (Modified Examples)

In the first to third embodiments, instead of a screw or a spring, an actuator can also be used as an elevation driving device as in the fourth embodiment. That is, in a configuration in which the reaction disk 1 is not connected to the driving rotor 20 by the telescopic mechanism 58, an actuator can also be used as a lift mechanism, a fixing mechanism, or a retention mechanism. Conversely, in the fourth embodiment in which the telescopic mechanism 58 is adopted, a lift mechanism of the reaction disk 1 in which a shaft force of a screw or a restoration force of a spring is used can also be used instead of the actuator 59. In the first to fifth embodiments, a configuration in which the reaction disk 1 is lifted up or lowered with a hand can be used without using the screw, the spring, or the actuator. In this case, when there is the handle 1d described in the third or fourth embodiment, work becomes easy. Even in a configuration in which there is no lift mechanism, the interference between the reaction cell 11 and the peripheral components can be appropriately inhibited by guiding the elevation trajectory of the reaction disk 1 by the guide 40.

### Reference Signs List

- 1:: reaction disk
- 7:: churning mechanism (in-chamber component)
- 9:: controller
- 11:: reaction cell
- 20:: driving rotor
- 30:: reaction chamber
- 40:: guide
- 50:: screw (retention mechanism, lift mechanism)
- 51:: head portion
- 52:: shaft portion
- 53:: body portion
- 54:: protrusion portion
- 55:: spring (retention mechanism, lift mechanism)
- 56:: screw (retention mechanism, lift mechanism)
- 58:: telescopic mechanism
- 58p:: protrusion (retention mechanism)
- 58s:: slit (retention mechanism)
- 59:: actuator (retention mechanism, lift mechanism)
- 100:: automatic analysis apparatus
- D1:: difference distance
- D2:: guide distance
- P2:: drain pipe
- V2:: drain valve

## Claims

1. An automatic analysis apparatus comprising:
a driving rotor configured such that a rotational center extends vertically;
a reaction disk mounted on the driving rotor;
a plurality of reaction cells installed in the reaction disk and configured to form a circular row concentric with the driving rotor;
a circular reaction chamber configured to accommodate the reaction cells; and
a guide configured to guide an elevation trajectory of the reaction disk with respect to the driving rotor.

2. The automatic analysis apparatus according to claim 1, further comprising:
an in-chamber component installed inside the reaction chamber and configured to be closer to the reaction cell than a wall surface of the reaction chamber,
wherein a guide distance of the reaction disk by the guide is set to be equal to or greater than a difference distance from a lower end of the reaction cell to an upper end of the in-chamber component with the reaction disk coming into contact with the driving rotor.

3. The automatic analysis apparatus according to claim 1, further comprising a retention mechanism configured to retain the reaction disk in a state in which the reaction disk is lifted with respect to the driving rotor.

4. The automatic analysis apparatus according to claim 3, further comprising a lift mechanism configured to translate the reaction disk vertically with respect to the driving rotor.

5. The automatic analysis apparatus according to claim 4, wherein the retention mechanism and the lift mechanism are screws screwed to the driving rotor in relation to the reaction disk.

6. The automatic analysis apparatus according to claim 5,
wherein the screw includes a head portion, a threaded shaft portion, a body portion connecting the head portion to the shaft portion, and a protrusion portion provided in the body portion, and
wherein, when the screw is tightened, the reaction disk comes into contact with the driving rotor and the protrusion portion becomes away from the reaction disk, and when the screw is loosened, the protrusion portion lifts up the reaction disk.

7. The automatic analysis apparatus according to claim 5, wherein only one screw is disposed at the rotational center.

8. The automatic analysis apparatus according to claim 5, wherein a plurality of the screws are disposed.

9. The automatic analysis apparatus according to claim 4,
wherein the retention mechanism and the lift mechanism include a spring that is interposed between the reaction disk and the driving rotor and pushes up the reaction disk with respect to the driving rotor and a screw that is screwed to the driving rotor and presses the reaction disk, and
wherein, when the screw is tightened, the reaction disk is pressed against a restoration force of the spring and descends, and when the screw is loosened, the reaction disk ascends by the restoration force of the spring.

10. The automatic analysis apparatus according to claim 4, wherein the retention mechanism and the lift mechanism are an actuator that pushes up the reaction disk with respect to the driving rotor.

11. The automatic analysis apparatus according to claim 1, further comprising a telescopic mechanism that includes a plurality of pipes and connects the reaction disk to the driving rotor.

12. The automatic analysis apparatus according to claim 11, wherein the telescopic mechanism includes an L-shaped slit formed in one of two pipes that are engaged with each other and a protrusion inserted into the slit and formed in the other pipe, and is extended and twined in a circumferential direction to be locked.

13. The automatic analysis apparatus according to claim 2, further comprising:
a drain pipe connected to the reaction chamber;
a drain valve provided in the drain pipe; and
a controller configured to control the drain valve,
wherein, when a signal to give an instruction to start maintenance is input, the controller controls the drain valve such that a liquid level of the reaction chamber descends lower than the lower end of the reaction cell ascending highest in a range of the guide distance.
